# EUROPEAN PATENT APPLICATION

(11) **EP 4 753 190 A1**
(43) Date of publication of application: **03.06.2026**
(21) Application number: 24848085.7
(22) Date of filing: 23.07.2024
(51) Int. Cl.: H04L 1/1829

(54) **COMMUNICATION METHOD, APPARATUS AND SYSTEM**

(30) Priority: 31.07.2023 CN 202310961045; 03.11.2023 CN 202311462008
(71) Applicant: HUAWEI TECHNOLOGIES CO., LTD., Shenzhen 518129 (CN)
(72) Inventor: QIANG, Li, Shenzhen, Guangdong 518129 (CN); MAO, Yingchao, Shenzhen, Guangdong 518129 (CN); LIU, Nannan, Shenzhen, Guangdong 518129 (CN)
(74) Representative: Epping - Hermann - Fischer
(86) International application number: PCT/CN2024/106928
(87) International publication number: WO 2025/026127

(57) **Abstract**

A communication method, and an apparatus and a system therefor are disclosed. The method includes: A terminal device receives N time value lists, where the N time value lists include a first time value list, the first time value list includes M1 time values, and the M1 time values are candidate values of a first discard timer corresponding to a first-type PDU set. The terminal device determines an initial time value of the first discard timer, and configures the first discard timer based on the initial time value; and starts the first discard timer when starting to receive the first-type PDU set, and discards a remaining PDU in the first-type PDU set when the first discard timer expires.

## Description

### CROSS-REFERENCE TO RELATED APPLICATIONS

This application claims priorities to Chinese Patent Application No. 202310961045.4, filed with the China National Intellectual Property Administration on July 31, 2023, and entitled "COMMUNICATION METHOD, AND APPARATUS AND SYSTEM THEREFOR", and to Chinese Patent Application No. 202311462008.5, filed with the China National Intellectual Property Administration of the PRC on November 3, 2023, and entitled "COMMUNICATION METHOD, AND APPARATUS AND SYSTEM THEREFOR", both of which are incorporated herein by reference in their entireties.

### TECHNICAL FIELD

Embodiments of this application relate to the communication field, and in particular, to a communication method, and an apparatus and a system therefor.

### BACKGROUND

With development of mobile communication technologies, a quantity of services that require a high data rate and low latency (high data rate and low latency, HDRLL) is increasing, and an XR (extended-range) service is a typical example. An XR technology is an extended display technology that integrates technologies such as augmented reality (augmented reality, AR), virtual reality (virtual reality, VR), and mixed reality (mixed reality, MR), can achieve a 3D effect with naked eyes and implement synchronous transmission of real-time image data, and can be used in many fields such as healthcare, education and learning, office conferences, tourism, military, stage effects, movies, and shopping.

For a service that requires a high data rate and low latency, such as an XR service, how to better implement transmission of a data unit is a problem that needs to be resolved currently.

### SUMMARY

Embodiments of this application provide a communication method, and an apparatus and a system therefor.

According to a first aspect, a communication method is provided. The method may be applied to a terminal device or a communication apparatus (for example, a chip) located inside the terminal device. The method includes: receiving N time value lists, where the N time value lists include a first time value list, the first time value list includes M1 time values, the M1 time values are candidate values of a first discard timer corresponding to a first-type protocol data unit set (PDU set), and both N and M1 are integers greater than or equal to 1; determining an initial time value of the first discard timer; configuring the first discard timer based on the initial time value; and starting the first discard timer when starting to receive the first-type PDU set, and discarding a remaining PDU in the first-type PDU set when the first discard timer expires, where the remaining PDU is a PDU to be transmitted in the first-type PDU set when the first discard timer expires.

In the foregoing implementation, different types of PDU sets correspond to discard timers of different duration. A network device may configure, for the terminal device, a candidate value of a discard timer corresponding to the first-type PDU set, so that the terminal device can control transmission of a PDU in a corresponding PDU set based on the discard timer corresponding to the first-type PDU set.

In a possible implementation, the method further includes: receiving first information, where the first information indicates an initial time value of the first discard timer, and the initial time value is one of the M1 time values; and determining the initial time value of the first discard timer includes: determining the initial time value of the first discard timer based on the first information.

In the foregoing implementation, the initial time value of the discard timer may be configured for the terminal device in an explicit indication manner.

In a possible implementation, the first information is an index of one time value in the M1 time values. In this implementation, the initial time value of the first discard timer is indicated to the terminal device, so that signaling overheads can be reduced.

In a possible implementation, the initial time value is a largest time value in the M1 time values or a 1^{st} time value in the M1 time values.

In a possible implementation, receiving the N time value lists includes: receiving first signaling, where the first signaling includes the N time value lists; and receiving the first information includes: receiving second signaling, where the second signaling includes the first information and a data radio bearer (data radio bearer, DRB) identifier, and the DRB identifier is a DRB identifier corresponding to a processing unit configured to process the first-type PDU set.

Optionally, if the second signaling is not received, the method further includes: determining the largest value or the 1^{st} time value in the M1 time values as the initial time value of the first discard timer; or determining a preset time value as the initial time value of the first discard timer.

In a possible implementation, the N time value lists further include a second time value list, the second time value list includes M2 time values, the M2 time values are candidate values of a second discard timer corresponding to a second-type PDU set, and M2 is an integer greater than or equal to 1; and the first information indicates a first time value, and the first time value is the initial time value of the first discard timer, or the first time value is initial time values of the first discard timer and the second discard timer. In this implementation, signaling overheads can be reduced.

In a possible implementation, determining the initial time value of the first discard timer includes: determining that the initial time value of the first discard timer is a largest time value in the M1 time values or a 1^{st} time value in the M1 time values.

In a possible implementation, the N time value lists further include the second time value list, the second time value list includes the M2 time values, the M2 time values are candidate values of the second discard timer corresponding to the second-type PDU set, and the first-type PDU set and the second-type PDU set belong to different PDU set importance (PDU set importance, PSI) ranges.

According to a second aspect, a transmission configuration method is provided. The method may be applied to a network device, or a unit or module that has a corresponding communication function in the network device. The method includes: sending N time value lists, where the N time value lists include a first time value list, the first time value list includes M1 time values, the M1 time values are candidate values of a first discard timer corresponding to a first-type PDU set, and both N and M1 are integers greater than 1.

In a possible implementation, the method further includes: sending first information, where the first information indicates an initial time value of the first discard timer, and the initial time value is one of the M1 time values.

In a possible implementation, sending the N time value lists includes: sending first signaling, where the first signaling includes the N time value lists; and sending the first information includes: sending second signaling, where the second signaling includes the first information and a DRB identifier, and the DRB identifier is a DRB identifier corresponding to a processing unit configured to process the first-type PDU set.

For some optional implementations and beneficial effects of the second aspect, refer to the first aspect. Details are not described again.

According to a third aspect, a communication method is provided. The method may be applied to a terminal device or a communication apparatus (for example, a chip) located inside the terminal device. The method includes: determining first latency jitter information of a PDU set; and sending the first latency jitter information. The terminal device feeds back the latency jitter information of the PDU set to a network device, so that the network device can perform transmission scheduling on the terminal device based on the latency jitter information reported by the terminal device. In a possible implementation, before determining the first latency jitter information of the PDU set, the method further includes: receiving first duration, where the first duration is duration for collecting statistics on latency jitter; and determining the first latency jitter information of the PDU set includes: determining first latency jitter information of the PDU set in the first duration.

In the foregoing implementation, the terminal device may monitor a latency jitter status in a window of the first duration, to avoid a case in which the terminal device frequently reports latency jitter information because frequent instantaneous latency jitter changes exceed a specified threshold, thereby saving network resources, and avoiding frequent configured grant (configured grant, CG) reconfiguration and/or discontinuous reception (discontinuous reception, DRX) reconfiguration by the network device based on the latency jitter information.

In a possible implementation, before determining the first latency jitter information of the PDU set, the method further includes: receiving a data radio bearer (DRB) identifier and a quality of service (quality of service, QoS) flow (QoS flow) identifier; and determining the first latency jitter information of the PDU set includes: determining first latency jitter information of a PDU set in a QoS flow corresponding to the QoS flow identifier in a DRB corresponding to the DRB identifier.

In a possible implementation, before determining the first latency jitter information of the PDU set, the method further includes: receiving a PDU session identifier and a QoS flow identifier; and determining the first latency jitter information of the PDU set includes: determining first latency jitter information of a PDU set in a QoS flow corresponding to the QoS flow identifier in a PDU session corresponding to the PDU session identifier.

In a possible implementation, the method further includes: sending the DRB identifier and the QoS flow identifier that correspond to the first latency jitter information, where the first latency jitter information is latency jitter information of the PDU set in the QoS flow corresponding to the QoS flow identifier in the DRB corresponding to the DRB identifier; or sending the PDU session identifier and the QoS flow identifier that correspond to the first latency jitter information, where the first latency jitter information is latency jitter information of the PDU set in the QoS flow corresponding to the QoS flow identifier in the PDU session corresponding to the PDU session identifier.

In a possible implementation, the method further includes: starting a first timer after sending the first latency jitter information, where duration of the first timer is equal to second duration; and determining second latency jitter information of the PDU set, and sending the second latency jitter information when the first timer expires.

The second duration may be understood as a backoff time. To be specific, after the first latency jitter information is sent, even if the terminal device triggers a latency jitter statistics collection operation and obtains the second latency jitter information through statistics collection, the second latency jitter information obtained through statistics collection again can be sent only after the second duration. In this way, compared with a case in which a latency jitter statistics and reporting operation is triggered when latency jitter exceeds a specified threshold, the foregoing implementation may avoid frequent reporting of latency jitter information when latency jitter is significant and frequent, thereby saving network resources, and avoiding frequent CG reconfiguration and/or DRX reconfiguration by the network device based on the latency jitter information.

In a possible implementation, the second duration is configured by a network side or is predefined.

In a possible implementation, the first latency jitter information includes one or more of the following: average latency jitter, maximum latency jitter, a latency jitter range, and minimum latency jitter.

In a possible implementation, the method further includes: sending capability information of a terminal device, where the capability information indicates that the terminal device has a capability of determining latency jitter information of a PDU set.

According to a fourth aspect, a communication method is provided. The method may be applied to a radio access network (radio access network, RAN) device. The method includes: determining a relationship between a PDU set type and PSI; and scheduling a first-type PDU set based on the relationship between the PDU set type and the PSI, where the first-type PDU set is one of the PDU set types.

In a possible implementation, the relationship between the PDU set type and the PDU set importance PSI is from a core network device, a terminal device, or another RAN device.

In a possible implementation, each PDU set corresponds to one level of PSI; and determining the relationship between the PDU set type and the PSI includes: determining the relationship between the PDU set type and the PSI based on at least one PSI threshold; or determining the relationship between the PDU set type and the PSI based on a mapping table between the PDU set type and a PSI range.

In a possible implementation, the RAN device is a source RAN device, and the method further includes: sending information about the relationship between the PDU set types to a target RAN device, where the information about the relationship indicates the relationship between the PDU set types.

In a possible implementation, sending the information about the relationship between the PDU set types to the target RAN device includes: sending a handover request message to the target RAN device, where the handover request message includes the information about the relationship between the PDU set types.

According to a fifth aspect, a communication method is provided. The method may be applied to a core network device. The method includes: sending information about a relationship between a PDU set type and PDU set importance PSI to a RAN device.

In a possible implementation, before sending the information about the relationship between the PDU set type and the PSI to the RAN device, the method further includes: receiving the information about the relationship between the PDU set type and the PSI from an application server.

In a possible implementation, the information about the relationship between the PDU set type and the PSI from the application server is per service; after receiving the information about the relationship between the PDU set type and the PSI from the application server, the method further includes: converting the information that is about the relationship between the PDU set type and the PSI and that is per service into information that is about the relationship between the PDU set type and the PSI and that is per (quality of service flow) QoS flow; and sending the information about the relationship between the PDU set type and the PSI to the RAN device includes: sending the information that is about the relationship between the PDU set type and the PSI and that is per QoS flow to the RAN device.

In a possible implementation, sending the information about the relationship between the PDU set type and the PSI to the RAN device includes: sending a path switch request acknowledgment message to a target RAN device, where the path switch request acknowledgment message includes the information about the relationship between the PDU set type and the PSI.

According to a sixth aspect, a communication method is provided. The method may be applied to an application server. The method includes: sending information about a relationship between a PDU set type and PSI to a core network device.

In a possible implementation, before sending the information about the relationship between the PDU set type and the PSI to the core network device, the method further includes: receiving the information about the relationship between the PDU set type and the PSI from a terminal device.

In a possible implementation, the information about the relationship between the PDU set type and the PSI includes at least one PSI threshold, the at least one PSI threshold is for obtaining at least two PSI ranges through division, and the at least two PSI ranges separately correspond to one PDU set type; or the information about the relationship between the PDU set type and the PSI is a mapping table between a PDU set type and a PSI range.

In a possible implementation, the information about the relationship between the PDU set type and the PSI is per service.

According to a seventh aspect, a communication method is provided. The method may be applied to a terminal device or a communication apparatus (for example, a chip) located inside the terminal device. The method includes: sending information about a relationship between a PDU set type and PSI to a RAN device.

In a possible implementation, sending the information about the relationship between the PDU set type and the PSI to the RAN device includes: sending a radio resource control (RRC) reconfiguration complete message to a target RAN device, where the RRC reconfiguration complete message includes the information about the relationship between the PDU set type and the PSI.

In a possible implementation, the information about the relationship between the PDU set type and the PSI includes at least one PSI threshold, the at least one PSI threshold is for obtaining at least two PSI ranges through division, and the at least two PSI ranges separately correspond to one PDU set type; or the information about the relationship between the PDU set type and the PSI is a mapping table between a PDU set type and a PSI range.

In a possible implementation, the information about the relationship between the PDU set type and the PSI is per data radio bearer DRB.

According to an eighth aspect, a communication method is provided. The method may be applied to a PDU receiver. The method includes: receiving M protocol data units PDUs, where M is an integer greater than or equal to 1, A PDUs are successfully received and B PDUs fail to be received in the M PDUs, the first information indicates a processing operation on the B PDUs, and both A and B are integers greater than or equal to 0; and sending first information, where the first information includes a receiving status of each of the M PDUs, and the first information indicates the processing operation on the B PDUs. In a possible implementation, the first information includes first indication information, and the first indication information indicates the processing operation on the B PDUs. In the foregoing implementation, the PDU receiver may indicate, in an explicit manner (for example, explicit indication by using the first indication information or second indication information) or an implicit manner (for example, the first information does not include second indication information) by using the first information that is for feeding back a status report, operation behavior of the PDU receiver for a PDU that fails to be received, so that a PDU transmitter can perform, based on a requirement of the receiver, a corresponding operation on the PDU that fails to be received.

In a possible implementation, the first information includes second indication information, where the second indication information indicates to discard the B PDUs.

According to a ninth aspect, a communication method is provided, and may be applied to a PDU transmitter. The method includes: sending M protocol data units PDUs, where M is an integer greater than or equal to 1; receiving first information, where the first information includes a receiving status of each of the M PDUs, and A PDUs are successfully received and B PDUs fail to be received in the M PDUs, or the first information indicates that the B PDUs fail to be received; and determining whether to retransmit or discard the B PDUs.

In a possible implementation, determining whether to retransmit or discard the B PDUs includes: receiving first indication information, where the first indication information indicates a processing operation on the B PDUs; and determining, based on the first indication information, whether to retransmit or discard the B PDUs.

In a possible implementation, the method further includes: receiving second indication information, where the second indication information indicates to discard the B PDUs.

In a possible implementation, if it is determined to discard the B PDUs, the method further includes: determining whether a quantity of PDUs that fail to be received in a PDU set to which the B PDUs belong meets a first condition (for example, the quantity of PDUs that fail to be received is greater than a specified threshold, or a ratio of the quantity of PDUs that fail to be received to a total quantity of PDUs in the PDU set to which the B PDUs belong is greater than a specified threshold); and if the first condition is met, discarding the PDU set.

A frame (PDU set) usually includes a plurality of PDUs. If one or more of these PDUs are lost and a loss ratio exceeds a specific value, the PDU receiver may fail to decode the frame even if a remaining PDU is correctly sent. Therefore, in the foregoing implementation, the PDU transmitter may delete, in advance, the PDUs that fail to be received, and may delete, in advance, other PDUs in a frame (that is, a PDU set) to which the PDUs belong and no longer send the other PDUs, thereby reducing network resource overheads.

According to a tenth aspect, a communication method is provided. The method may be applied to a terminal device. The method includes: receiving a first message, where the first message includes first indication information, the first indication information indicates to activate a second discard timer or deactivate the second discard timer, and the second discard timer is one of at least two discard timers; and if the first indication information indicates to activate the second discard timer, performing the following steps: starting the second discard timer when starting to receive a second-type PDU set, and discarding a PDU in the second-type PDU set when the second discard timer expires, where the PDU is a PDU to be transmitted in the second-type PDU set when the second discard timer expires.

Optionally, the first message is an RRC reconfiguration (RRR Reconfiguration) message.

The "activating the second discard timer" may also be explained as "using the second discard timer for the second-type PDU set". The "deactivating the second discard timer" may also be explained as "not using the second discard timer for the second-type PDU set, but using a first discard timer".

In a possible implementation, the method further includes: if the first indication information indicates to deactivate the second discard timer, starting a first discard timer when starting to receive a PDU set, and discarding a PDU in the PDU set when the first discard timer expires, where the PDU is a PDU to be transmitted in the PDU set when the first discard timer expires, and the PDU set is a first-type PDU set or the second-type PDU set.

In a possible implementation, the first message further includes a first time value, and the first time value is a time value configured for the first discard timer; and starting the first discard timer includes: setting duration of the first discard timer to be equal to the first time value.

In a possible implementation, the first message further includes a second time value, and the second time value is a time value configured for the second discard timer; and starting the second discard timer includes: setting duration of the second discard timer to be equal to the second time value.

In a possible implementation, duration of the second timer is equal to a second time value, and the second time value is preconfigured, or the second time value is stored by a terminal.

In a possible implementation, the method further includes: receiving a second message, where the second message includes a third time value, and the third time value is a time value configured for the second discard timer; and starting the second discard timer when starting to receive a second-type PDU set, where the duration of the second discard timer is equal to the third time value, and discarding, when the second discard timer expires, a PDU that is in the second-type PDU set and that is to be transmitted when the second discard timer expires.

Optionally, the second message is an RRC reconfiguration (RRR CReconfiguration) message.

According to an eleventh aspect, a communication method is provided. The method may be applied to a network device. The method includes: sending a first message, where the first message includes first indication information, the first indication information indicates to activate a second discard timer or deactivate the second discard timer, and the second discard timer is one of at least one discard timer.

In a possible implementation, the first message further includes a first time value and/or a second time value, the first time value is a time value configured for a first discard timer, and the second time value is a time value configured for the second discard timer.

According to a twelfth aspect, a communication method is provided. The method may be applied to a terminal device. The method includes: receiving a first message, where the first message includes first indication information, the first indication information indicates to use one time value in a plurality of candidate time values to set duration of a discard timer, and the plurality of candidate time values include a first time value and a second time value; and starting the discard timer when starting to receive a PDU set, and discarding a PDU in the PDU set when the discard timer expires, where the PDU is a PDU to be transmitted in the PDU set when the discard timer expires, where if the PDU set belongs to a first-type PDU set, the duration of the discard timer is equal to the first time value; if the PDU set belongs to a second-type PDU set and the first indication information indicates to use the first time value to set the duration of the discard timer, the duration of the discard timer is equal to the first time value; or if the PDU set belongs to a second-type PDU set and the first indication information indicates to use the second time value to set the duration of the discard timer, the duration of the discard timer is equal to the second time value.

Optionally, the second message is an RRC reconfiguration (RRR CReconfiguration) message.

In a possible implementation, the first message further includes the first time value and/or the second time value.

In a possible implementation, the second time value is preconfigured, or is stored by a terminal.

In a possible implementation, the method further includes: receiving a second message, where the second message includes a third time value; and starting the discard timer when starting to receive a PDU set, and discarding a PDU in the first-type PDU set when the discard timer expires, where the PDU is a PDU to be transmitted in the PDU set when the discard timer expires, where if the PDU set is the second-type PDU set, the duration of the discard timer is equal to the third time value.

According to a thirteenth aspect, a communication method is provided. The method may be applied to a network device. The method includes: sending a first message, where the first message includes first indication information, the first indication information indicates to use one time value in a plurality of candidate time values to set duration of a discard timer, and the plurality of candidate time values include a first time value and a second time value.

In a possible implementation, the first message further includes the first time value and/or the second time value.

In a possible implementation, the method further includes: sending a second message, where the second message includes a third time value, and the third time value is a time value reconfigured for the discard timer.

According to a fourteenth aspect, a communication method is provided. The method may be applied to a terminal device. The method includes: receiving a first message, where the first message includes a first time value, and the first time value is a time value configured for a second discard timer; and starting the second discard timer when starting to receive a second-type PDU set, where duration of the second discard timer is equal to the first time value; and discarding a PDU in the second-type PDU set when the second discard timer expires, where the PDU is a PDU to be transmitted in the second-type PDU set when the second discard timer expires.

Optionally, the first message is an RRC reconfiguration (RRR CReconfiguration) message.

In a possible implementation, the first message further includes a second time value, and the second time value is a time value reconfigured for a first discard timer; and the method further includes: starting the first discard timer when starting to receive a first-type PDU set, where duration of the first discard timer is equal to the second time value; and discarding a PDU in the first-type PDU set when the first discard timer expires, where the PDU is a PDU to be transmitted in the first-type PDU set when the first discard timer expires.

The first message is for configuring duration of a discard timer, or is for reconfiguring duration of a discard timer.

According to a fifteenth aspect, a communication method is provided. The method may be applied to a terminal device. The method includes: receiving a first message, where the first message includes at least two time values, the at least two time values include a first time value and a second time value, the first time value is a time value configured for a first discard timer, and the second time value is a time value configured for a second discard timer; and if the second discard timer is arranged before the first discard timer, performing the following steps: starting the first discard timer when starting to receive a first-type PDU set, where duration of the first discard timer is equal to the first time value; and discarding a PDU in the first-type PDU set when the first discard timer expires, where the PDU is a PDU to be transmitted in the first-type PDU set when the first discard timer expires; and starting the second discard timer when starting to receive a second-type PDU set, where duration of the second discard timer is equal to the second time value; and discarding a PDU in the second-type PDU set when the second discard timer expires, where the PDU is a PDU to be transmitted in the second-type PDU set when the second discard timer expires.

Optionally, the first message is an RRC reconfiguration (RRR CReconfiguration) message.

In a possible implementation, the method further includes: if the first discard timer is arranged before the second discard timer, performing the following steps: starting the first discard timer when starting to receive a PDU set, where the duration of the first discard timer is equal to the first time value; and discarding a PDU in the PDU set when the first discard timer expires, where the PDU is a PDU to be transmitted in the PDU set when the first discard timer expires, and the PDU set is the first-type PDU set or the second-type PDU set.

In a possible implementation, the method further includes: receiving a second message, where the second message includes a third time value, and the third time value is a time value configured for the second discard timer; and starting the second discard timer when starting to receive a second-type PDU set, where the duration of the second discard timer is equal to the third time value; and discarding a PDU in the second-type PDU set when the second discard timer expires, where the PDU is a PDU to be transmitted in the second-type PDU set when the second discard timer expires. According to a sixteenth aspect, a communication method is provided. The method may be applied to a terminal device. The method includes: receiving a first message, where the first message includes a first time value and a second time value, the first time value is a time value configured for a first discard timer, and the second time value is a time value configured for a second discard timer; starting the first discard timer when starting to receive a first-type PDU set, where duration of the first discard timer is equal to the first time value; and discarding a PDU in the first-type PDU set when the first discard timer expires, where the PDU is a PDU to be transmitted in the first-type PDU set when the first discard timer expires; and starting the second discard timer when starting to receive a second-type PDU set, where duration of the second discard timer is equal to the second time value; and discarding a PDU in the second-type PDU set when the second discard timer expires, where the PDU is a PDU to be transmitted in the second-type PDU set when the second discard timer expires.

In a possible implementation, the method further includes: receiving a second message, where the second message indicates to deactivate the second discard timer; and starting the first discard timer when starting to receive a PDU set, where the duration of the first discard timer is equal to the first time value; and discarding a PDU in the PDU set when the first discard timer expires, where the PDU is a PDU to be transmitted in the PDU set when the first discard timer expires, and the PDU set is the first-type PDU set or the second-type PDU set.

In a possible implementation, the method further includes: receiving a third message, where the third message includes a third time value, and the third time value is a time value reconfigured for the second discard timer; and starting the second discard timer when starting to receive a second-type PDU set, where the duration of the second discard timer is equal to the third time value; and discarding a PDU in the second-type PDU set when the second discard timer expires, where the PDU is a PDU to be transmitted in the second-type PDU set when the second discard timer expires. According to a seventeenth aspect, a communication system is provided. The communication system includes a RAN device configured to perform the method according to any implementation of the fourth aspect and a core network device configured to perform the method according to any implementation of the fifth aspect.

According to an eighteenth aspect, a communication apparatus is provided, and includes a module configured to perform the method according to any implementation of any one of the first aspect to the sixteenth aspect.

According to a nineteenth aspect, a communication apparatus is provided, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement, by using a logic circuit or executing code instructions, the method according to any implementation of any one of the first aspect to the sixteenth aspect.

According to a twentieth aspect, a computer-readable storage medium is provided. The storage medium stores a computer program or instructions. When the computer program or the instructions are executed by a communication apparatus, the method according to any implementation of any one of the first aspect to the sixteenth aspect is implemented.

According to a twenty-first aspect, a communication method is provided, and includes: A network device sends N time value lists, where the N time value lists include a first time value list, the first time value list includes M1 time values, the M1 time values are candidate values of a first discard timer corresponding to a first-type protocol data unit set (PDU set), and both N and M1 are integers greater than or equal to 1. The terminal device determines an initial time value of the first discard timer. The terminal device configures the first discard timer based on the initial time value; and starts the first discard timer when starting to receive the first-type PDU set, and discards a remaining PDU in the first-type PDU set when the first discard timer expires, where the remaining PDU is a PDU to be transmitted in the first-type PDU set when the first discard timer expires.

According to a twenty-second aspect, a communication method is provided, and includes: A terminal device determines first latency jitter information of a PDU set; and the terminal device sends the first latency jitter information to a network device. The network device performs transmission scheduling on the terminal device based on the latency jitter information reported by the terminal device.

According to a twenty-third aspect, a communication method is provided, and includes: A core network device sends information about a relationship between a PDU set type and PDU set importance PSI to a RAN device.

In a possible implementation, before the core network device sends the information about the relationship between the PDU set type and the PSI to the RAN device, the method further includes: The application server sends the information about the relationship between the PDU set type and the PSI to the core network device.

### BRIEF DESCRIPTION OF DRAWINGS

FIG. 1 is a diagram of a relationship between a video frame of an XR service and a PDU in a related technology;
FIG. 2 is a diagram of PDU set types classified by using a PSI threshold according to an embodiment of this application;
FIG. 3 is a diagram of a possible network architecture according to an embodiment of this application;
FIG. 4 is a diagram of uplink data transmission between layers according to an embodiment of this application;
FIG. 5 is a schematic flowchart of a transmission configuration method according to an embodiment of this application;
FIG. 6 is a signaling interaction diagram of configuring a time value list and first information by using a message according to an embodiment of this application;
FIG. 7 is a signaling interaction diagram of configuring a time value list and first information by using two pieces of signaling according to an embodiment of this application;
FIG. 8 is a schematic flowchart of a transmission scheduling method according to an embodiment of this application;
FIG. 9 is a schematic flowchart showing that a core network device sends information about a relationship between a PDU set type and PSI to a RAN device according to an embodiment of this application;
FIG. 10 is a schematic flowchart showing that a core network device sends information about a relationship between a PDU set type and PSI to a RAN device according to an embodiment of this application;
FIG. 11 is a schematic flowchart showing that a terminal device sends information about a relationship between a PDU set type and PSI to a RAN device according to an embodiment of this application;
FIG. 12 is a schematic flowchart of sending information about a relationship between a PDU set type and PSI to a target RAN device in a RAN handover process according to an embodiment of this application;
FIG. 13 is a schematic flowchart of a transmission feedback method according to an embodiment of this application;
FIG. 14 is a schematic flowchart of a transmission feedback method according to an embodiment of this application;
FIG. 15 is a diagram of configuration of a discard timer in a related technology;
FIG. 16 is a schematic flowchart of a transmission method according to an embodiment of this application;
FIG. 17 is a diagram of configuration of a discard timer according to an embodiment of this application;
FIG. 18 is a schematic flowchart of another transmission method according to an embodiment of this application;
FIG. 19 is a diagram of reconfiguring a discard timer by using an RRC reconfiguration message and activating a second discard timer according to an embodiment of this application;
FIG. 20 is a schematic flowchart of another transmission method according to an embodiment of this application;
FIG. 21 is a diagram of implicitly indicating, by using an arrangement order of a first time value and a second time value, whether to activate a second discard timer according to an embodiment of this application;
FIG. 22 is a schematic flowchart of another transmission method according to an embodiment of this application;
FIG. 23 is a schematic flowchart of another transmission method according to an embodiment of this application;
FIG. 24 is a diagram of a structure of a communication apparatus according to an embodiment of this application; and
FIG. 25 is a diagram of a structure of another communication apparatus according to an embodiment of this application.

### DESCRIPTION OF EMBODIMENTS

Before the technical solutions provided in this application are described, related technologies in this application are first explained and described, to better understand the technical solutions provided in this application.

An XR technology is an extended display technology that integrates AR, VR, and MR technologies, and can achieve a 3D effect with naked eyes and implement synchronous transmission of real-time image data.

Based on a high efficiency video coding (high efficiency video coding, HEVC) standard, an encoded video stream of an XR service includes a series of groups of pictures (group of picture, GoP) that are sequentially arranged. A first frame of a GoP is an I-frame (also referred to as a key frame), followed by a P-frame, and may further include a B-frame. The I-frame is an intra-frame encoded image, the P-frame is a forward prediction frame (also referred to as a forward reference frame), and the B-frame is a bidirectional interpolation frame (also referred to as a bidirectional reference frame). It may be considered that the I-frame is a complete image, and the P-frame and the B-frame record changes relative to the I-frame. Therefore, decoding of the P-frame and the B-frame depends on the I-frame.

It may be understood that the video stream of the XR service may alternatively be encoded based on another video encoding manner. According to different encoding manners, types of video frames obtained through encoding are different, for example, a basic frame, an enhanced frame, and a B-frame may be included.

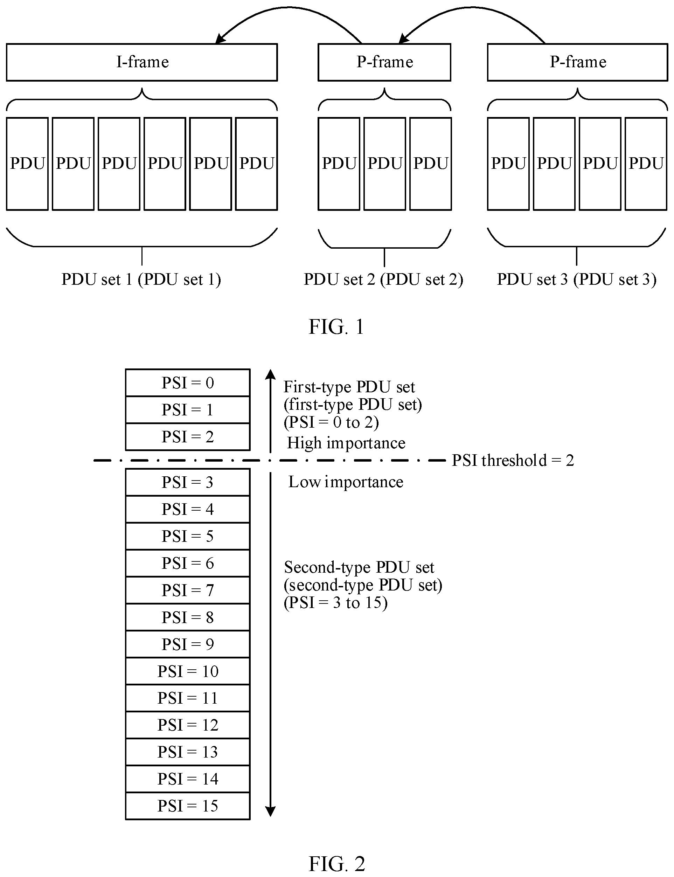

A video frame usually includes a large amount of data, and needs to be transmitted by using a plurality of data packets. The data packet is referred to as a protocol data unit (protocol data unit, PDU) in the 3rd generation partnership project (3rd Generation Partnership Project, 3GPP). Refer to FIG. 1. FIG. 1 shows an example of a relationship between PDUs and video frames of different types in an XR service. As shown in FIG. 1, decoding of a P-frame needs to depend on a video frame before the P-frame (for example, the video frame before the P-frame may be a P-frame or an I-frame). The I-frame and the P-frame separately correspond to a plurality of PDUs. In other words, both the I-frame and the P-frame need to be transmitted by using a plurality of PDUs. The I-frame contains more data than the P-frame. Therefore, a quantity of PDUs corresponding to the I-frame is greater than a quantity of PDUs corresponding to the P-frame. All PDUs corresponding to one video frame may be referred to as a PDU set (PDU set), that is, a video frame may be understood as a PDU set.

In the following descriptions of this application, "frame", "video frame", "PDU set", "data burst", and "burst" represent a same meaning, and may be replaced with each other.

Different types of frames have different importance levels. For example, an I-frame is more important than a P-frame. From a perspective of application layer encoding and decoding, video frames may be classified into different importance levels based on an amount of encoded information. An importance level of a frame may be identified by using PSI (PDU set importance). Currently, the PSI includes 16 levels. Correspondingly, video frames (PDU set) of an XR service may be classified into 16 types. A value of the PSI ranges from 0 to 15 in descending order of importance. For example, if 100% information in an image is encoded in one PDU set (for example, an I-frame), PSI of the PDU set is equal to 0. For another example, if 90% information in an image is encoded in one PDU set, PSI of the PDU set is equal to 1.

An information field of a PDU includes a frame type/frame PSI field, for carrying PSI. The information field has 4 bits in total.

Differentiated scheduling of different types of video frames may be implemented based on PSI of a PDU set. For example, for an unimportant PDU set, a PDU in the PDU set may be discarded.

To reduce scheduling complexity, currently, the 16 types of video frames (PDU set) are classified into several types (which may also be referred to as a similar description of classified into several groups), for example, classified into two or three PDU set types or PDU set groups, where each PDU set type corresponds to one PSI range. For example, 16 types of PDU sets are classified into a first-type PDU set and a second-type PDU set. Table 1 shows a mapping relationship between a first-type PDU set and a PSI range and between a second-type PDU set and a PSI range.

**Table 1: Mapping relationship between a PDU set and a PSI range**

| PDU set type | PSI range |
|---|---|
| First-type PDU set | 0 to 2 |
| Second-type PDU set | 3 to 14 |

As shown in Table 1, 16 types of PDU sets may be classified into the first-type PDU set and the second-type PDU set based on a PSI threshold. A PSI range corresponding to the first-type PDU set is 0 to 2, that is, PDU sets whose PSI is equal to 0, 1, and 2 belong to the first-type PDU set. A PSI range corresponding to the second-type PDU set is 3 to 14, that is, PDU sets whose PSI is equal to 3 to 14 belong to the second-type PDU set.

The foregoing classification manner may also be understood as that the 16 types of PDU sets are classified into the first-type PDU set and the second-type PDU set by using a PSI threshold. A value of the PSI threshold may be 2, indicating that a PSI range greater than 2 is classified into one type, and a PSI range less than or equal to 2 is classified into another type. The value of the PSI threshold may also be 3, indicating that a PSI range greater than or equal to 3 is classified into one type, and a PSI range less than 3 is classified into another type. For example, FIG. 2 is a diagram of a first-type PDU set and a second-type PDU set classified by using a PSI threshold. As shown in FIG. 2, the value of the PSI threshold is equal to 2, and the first-type PDU set and the second-type PDU set may be obtained through classification by using the PSI threshold. A PSI value range of the first-type PDU set is 0 to 2, a PSI value range of the second-type PDU set is 3 to 14, and importance of the first-type PDU set is higher than importance of the second-type PDU set.

A quantity of PDU set types classified based on the PSI and an PSI range corresponding to each PDU set type are related to a specific service. For different services, meanings of "important/unimportant" may be different. For example, for remote surgery, video frames whose PSI ranges from 0 to 14 are important video frames, and video frames whose PSI is 15 may be discarded; for VR games, video frames whose PSI ranges from 0 to 5 are important video frames, and video frames whose PSI ranges from 6 to 15 may be discarded.

A network may perform transmission scheduling by using a PDU set type as a granularity. For example, the 16 types of PDU sets are classified into the first-type PDU set and the second-type PDU set, and the first-type PDU set is more important than the second-type PDU set. When the network is congested, the network may preferentially discard a PDU in the second-type PDU set, to ensure transmission of a PDU in the first-type PDU set.

It may be understood that the foregoing uses an example in which the PDU sets with 16 types of PSI are classified into two types for description. The PDU sets with 16 types of PSI may be classified into more types based on a scheduling requirement and/or a service requirement. This is not limited in this embodiment of this application. Regardless of whether PSI is classified based on a PSI threshold or a mapping table, the PSI threshold or the mapping table may correspond to various granularities, such as a UE granularity (per UE), a packet data convergence protocol (Packet Data Convergence Protocol, PDCP) entity granularity (per PDCP entity), a data radio bearer (data radio bearer, DRB) granularity (per DRB), an IP flow granularity (per IP flow), and an XR service granularity. The UE granularity means that the PSI threshold or the mapping table is valid for all XR services of UE. The PDCP entity granularity means that a PSI threshold or a mapping table is valid for an XR service on a specific PDCP entity, and different PDCP entities may be associated with different PSI thresholds or mapping tables. The DRB granularity means that a PSI threshold or a mapping table is valid for an XR service on a specific DRB, and different DRBs may be associated with different PSI thresholds or mapping tables. The IP flow granularity (per IP flow) means that a PSI threshold or a mapping table is valid for an XR service on a specific IP flow, and different IP flows may be associated with different PSI thresholds or mapping tables.

It may be understood that the foregoing descriptions are provided by using an example in which the PSI includes 16 levels. A manner of classification of importance levels of PDU sets and a quantity of levels are not limited in embodiments of this application.

The following describes embodiments of this application with reference to the accompanying drawings.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

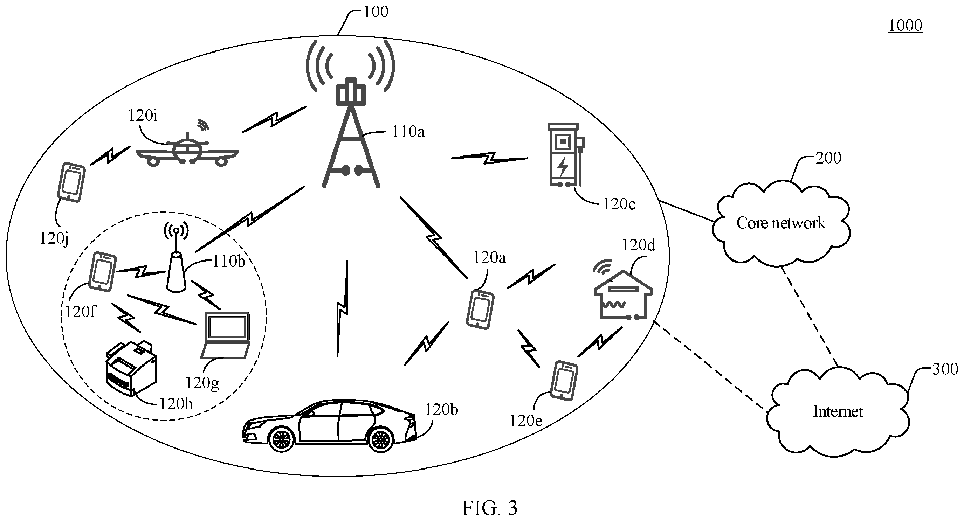

FIG. 3 is a diagram of an architecture of a communication system 1000 to which embodiments of this application are applied. As shown in FIG. 3, the communication system includes a radio access network 100 and a core network 200. Optionally, the communication system 1000 may further include an internet 300. The radio access network 100 may include at least one radio access network device (for example, 110a and 110b in FIG. 3), and may further include at least one terminal (for example, 120a to 120j in FIG. 3). The terminal is connected to the radio access network device in a wireless manner, and the radio access network device is connected to the core network in a wireless or wired manner. A core network device and the radio access network device may be independent and different physical devices, functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 3 is only a diagram. The communication system may further include other network devices, for example, may further include a wireless relay device and a wireless backhaul device, which are not shown in FIG. 3.

The radio access network device may be a base station (base station), an evolved NodeB (evolved NodeB, eNodeB), a transmission reception point (transmission reception point, TRP), a next-generation NodeB (next generation NodeB, gNB) in a 5G mobile communication system, a next-generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete some or all of functions of a physical layer. For specific descriptions of the foregoing protocol layers, refer to technical specifications related to a 3rd generation partnership project (3rd generation partnership project, 3GPP). The radio access network device may be a macro base station (for example, 110a in FIG. 3), may be a micro base station or an indoor base station (for example, 110b in FIG. 3), may be a relay node or a donor node, or the like. A specific technology and a specific device form that are used by the radio access network device are not limited in embodiments of this application.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The core network may include a plurality of core network devices 300. When the network architecture shown in FIG. 3 is applicable to a 5th generation mobile communication technology (5th generation mobile communication technology, 5G) communication system, the core network device 300 may be an access and mobility management function (access and mobility management function, AMF) entity, a session management function (session management function, SMF) entity, a user plane function (user plane function, UPF) entity, or the like.

The network device and the terminal may be at fixed locations, or may be movable. The network device and the terminal may be deployed on the land, including an indoor device, an outdoor device, a handheld device, or a vehicle-mounted device; may be deployed on the water surface; or may be deployed on an airplane, a balloon, and an artificial satellite. Application scenarios of the network device and the terminal are not limited in embodiments of this application.

Roles of the network device and the terminal may be relative. For example, a helicopter or an uncrewed aerial vehicle 120i in FIG. 3 may be configured as a mobile network device. For the terminal 120j that accesses the radio access network 100 via 120i, the uncrewed aerial vehicle 120i is a network device. However, for the network device 110a, 120i is a terminal. To be specific, 110a and 120i communicate with each other according to a radio air interface protocol. Certainly, 110a and 120i may alternatively communicate with each other according to an interface protocol between network devices. In this case, compared with 110a, 120i is also a network device. Therefore, both the network device and the terminal may be collectively referred to as a communication apparatus. 110a and 110b in FIG. 3 may be referred to as a communication apparatus having a function of the network device, and 120a to 120j in FIG. 3 may be referred to as a communication apparatus having a function of the terminal.

Communication between a network device and a terminal, between network devices, or between terminals may be performed by using a licensed spectrum, may be performed by using an unlicensed spectrum, or may be performed by using both a licensed spectrum and an unlicensed spectrum. Communication may be performed by using a spectrum of 6 gigahertz (gigahertz, GHz) or below, or may be performed by using a spectrum of 6 GHz or above. Alternatively, communication may be performed by using both a spectrum of 6 GHz or below and a spectrum of 6 GHz or above. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal may alternatively be performed by a module (for example, a chip or a modem) in the terminal, or may be performed by an apparatus including the function of the terminal.

In embodiments of this application, the network device sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal.

The communication method provided in embodiments of this application is described by using a network apparatus and a terminal apparatus as an example. The network apparatus in embodiments of this application may be a network device, or a chip, a unit, or a module in the network device. For example, the network apparatus may be the access network device 110a or the access network device 110b in FIG. 1. Alternatively, the network apparatus may be a communication apparatus having a function of a network device, or a chip, a unit, or a module inside the communication apparatus having the function of the network device. The terminal apparatus in embodiments of this application may be a terminal device, or a chip, a unit, or a module in a terminal device, for example, may be any terminal 120 shown in FIG. 1. Alternatively, the terminal apparatus may be a communication apparatus having a function of a terminal, or a chip, a unit, or a module inside the communication apparatus having the function of the terminal. For ease of understanding, in embodiments of this application, an example in which the terminal apparatus is a terminal device or a chip, a unit, or a module inside the terminal device, and the network apparatus is a network device or a chip, a unit, or a module inside the network device is used for description.

In the network architecture shown in FIG. 3, communication between the network device and the terminal device may comply with a specific protocol layer structure. For example, a control plane protocol layer structure may include functions of protocol layers such as a radio resource control (radio resource control, RRC) layer, a PDCP layer, a radio link control (radio link control, RLC) layer, a MAC layer, and a physical layer (physical layer, PHY), and a user plane protocol layer structure may include functions of protocol layers such as a PDCP layer, an RLC layer, a MAC layer, and a physical layer. In a possible implementation, an SDAP layer may be further included above the PDCP layer. For example, the network device may implement the functions of the protocol layers such as the RRC layer, the PDCP layer, the RLC layer, and the MAC layer through one node or a plurality of nodes.

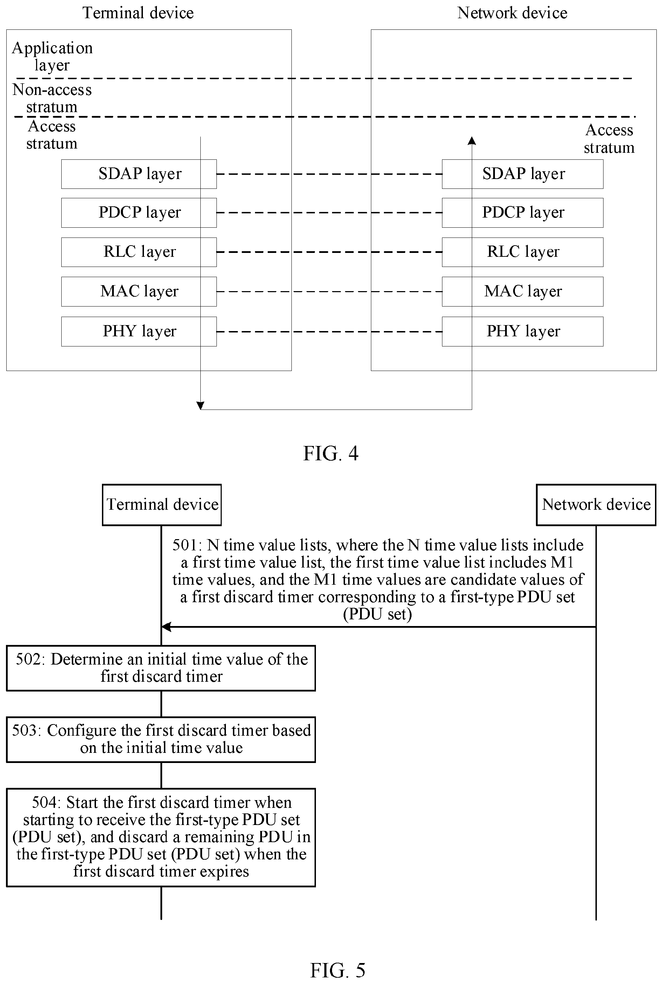

Data transmission between the network device and the terminal device is used as an example. Data transmission needs to go through the user plane protocol layer such as the SDAP layer, the PDCP layer, the RLC layer, the MAC layer, and the physical layer. The SDAP layer, the PDCP layer, the RLC layer, the MAC layer, and the physical layer are also collectively referred to as an access stratum. Because a data transmission direction includes sending or receiving, each layer is further divided into a sending part and a receiving part. Uplink data transmission is used as an example. FIG. 4 is a diagram of uplink data transmission between layers. In FIG. 4, a downward arrow represents data sending, and an upward arrow represents data receiving. After obtaining data from an upper layer, a PDCP layer transmits the data to an RLC layer and a MAC layer, the MAC layer generates a transport block (transport block, TB), and then wireless transmission is performed through a physical layer. The data is correspondingly encapsulated at each layer. Data received by a layer from an upper layer of the layer is considered as a service data unit (service data unit, SDU) of the layer. After being encapsulated at the layer, the data becomes a protocol data unit (protocol data unit, PDU), and is then transferred to a next layer. For example, data received by the PDCP layer from an upper layer is referred to as a PDCP SDU, and data sent by the PDCP layer to a lower layer is referred to as a PDCP PDU; data received by the RLC layer from an upper layer is referred to as an RLC SDU, and data sent by the RLC layer to a lower layer is referred to as an RLC PDU; and data received by the MAC layer from an upper layer is referred to as a MAC SDU, and data sent by the MAC layer to a lower layer is referred to as a MAC PDU. The MAC PDU is also referred to as a TB. In a protocol, layers correspond to each other in a form of channels. The RLC layer corresponds to the MAC layer through a logical channel (logical channel, LCH), the MAC layer corresponds to the physical layer through a transport channel (transport channel), and the physical layer corresponds to a physical layer at another end through a physical channel (physical channel). The physical channel is below the physical layer.

In addition, it can be further learned from FIG. 4 that the terminal device may further have an application layer and a non-access stratum. The application layer may be configured to provide a service for an application program on the terminal device. The non-access stratum may be configured to forward user data, for example, may forward uplink data received from the application layer to the SDAP layer, or may forward downlink data received from the SDAP layer to the application layer. The terminal device may sequentially transmit, from the physical layer to the application layer, downlink data received from the network device, so that the application layer provides the downlink data for the application program.

In embodiments of this application, terms such as a PDU, an SDU, a packet, and data packet may be replaced with each other, without affecting implementation and the protection scope of the solutions of this application.

In embodiments of this application, terms such as a PDU set, a burst, a data burst, an SDU set, a video frame, and a frame may be replaced with each other, without affecting implementation and the protection scope of the solutions of this application.

In embodiments of this application, terms such as classification, grouping, class, type, importance, and importance level may be replaced with each other, without affecting execution and the protection scope of the solutions of this application.

To better perform transmission scheduling, embodiments of this application provide a solution in terms of transmission configuration. In terms of transmission configuration, in embodiments of this application, a time value list corresponding to each type of PDU set and an initial time of a discard timer may be configured for a terminal device, so that the terminal device can configure a discard timer of a corresponding PDU set based on the initial time and the time value list, to perform transmission scheduling on a terminal device side based on the discard timer. With reference to FIG. 5, the following describes a transmission configuration method provided in an embodiment of this application. Based on the architecture of the network system shown in FIG. 1 and the content described in the foregoing related technologies, FIG. 5 is an example of a schematic flowchart of a transmission configuration method according to an embodiment of this application. The solution in FIG. 5 is described by using an example in which a network apparatus and a terminal apparatus interact with each other. Specifically, the procedure is described by using an example in which the network apparatus is a network device and the terminal apparatus is a terminal device. For related descriptions of the network apparatus and the terminal apparatus, refer to the foregoing content. Details are not described again.

FIG. 5 is a schematic flowchart of a communication method according to an embodiment of this application.

As shown in FIG. 5, the procedure may include the following steps.

Step 501: A network device sends N time value lists to a terminal device, and correspondingly, the terminal device receives the N time value lists. N is an integer greater than or equal to 1.

Each time list in the N time value lists may include a plurality of different time values. Quantities of time values included in different time value lists may be the same or may be different. For example, the N time value lists include a first time value list and a second time value list, the first time value list includes M1 time values (M1 is an integer greater than or equal to 1), and the second time value list includes M2 time values (M2 is an integer greater than or equal to 1), where M1 and M2 may be equal or may not be equal.

Each time value list in the N time value lists corresponds to one PDU set type. For example, the first time value list corresponds to a first-type PDU set, and the second time value list corresponds to a second-type PDU set. An example of the first-type PDU set and the second-type PDU set may be shown in Table 1. The M1 time values in the first time value list are candidate values of a first discard timer corresponding to the first-type PDU set, and the M2 time values in the second time value list are candidate values of a second discard timer corresponding to the second-type PDU set. The network device may indicate, by using signaling, the terminal device to switch between different time values in a time value list, that is, to set duration of a discard timer by using different time values. For example, when a network is congested, the network device may indicate, by using signaling, the terminal device to set the duration of the discard timer based on a small candidate value, to reduce a time length for waiting for sending a PDU and reduce PDU accumulation, thereby alleviating congestion.

According to a protocol, the discard timer is implemented at a PDU level. A PDCP entity is used as an example. After a data packet is delivered from an upper layer (for example, an application layer) to the PDCP entity, the PDCP entity starts a discard timer (or referred to as a PDCP discard timer) for the data packet, and the discard timer starts counting down after being started. If the data packet is processed as a PDU by the PDCP and is sent before the discard timer expires, the discard timer stops timing or is deleted. If the discard timer expires, it indicates that a time length for the PDU to wait in a buffer of a PDCP layer reaches an upper limit. Based on a transmission scheduling policy, the PDU is deleted from the buffer of the PDCP layer, and correspondingly, the discard timer is also deleted.

In this embodiment of this application, in a possible implementation, a corresponding discard timer may be set for a PDU set. For example, the first-type PDU set shown in Table 1 is used as an example. Based on the PSI range (0 to 2) corresponding to the first-type PDU set, a discard timer corresponding to a PDU set whose PSI is equal to 0 may be set for the PDU set, a discard timer corresponding to a PDU set whose PSI is equal to 1 may be set for the PDU set, and a discard timer corresponding to a PDU set whose PSI is equal to 2 may be set for the PDU set. In addition, duration of the discard timers corresponding to the PDU sets in the PSI value range is the same, for example, a time value in the first time list. In this way, the corresponding first discard timer may be set for the first-type PDU set. Similarly, the corresponding second discard timer may be set for the second-type PDU set.

In another possible implementation, a PDU-level discard timer may be reused as a discard timer corresponding to a PDU set. For example, the first-type PDU set is still used as an example. Based on the PSI range (0 to 2) corresponding to the first-type PDU set, a discard timer corresponding to a PDU that is first delivered to the PDCP entity in a PDU set whose PSI is equal to 0 may be used as a discard timer corresponding to the PDU set, to perform transmission control on all PDUs in the PDU set. Similarly, a discard timer corresponding to a PDU that is first delivered to the PDCP entity in a PDU set whose PSI is equal to 1 may be used as a discard timer corresponding to the PDU set, to perform transmission control on all PDUs in the PDU set, and a discard timer corresponding to a PDU that is first delivered to the PDCP entity in a PDU set whose PSI is equal to 2 may be used as a discard timer corresponding to the PDU set, to perform transmission control on all PDUs in the PDU set. In addition, duration of the discard timers corresponding to the PDU sets in the PSI value range is the same, for example, a time value in the first time list. In this way, the corresponding first discard timer may be set for the first-type PDU set. Similarly, the corresponding second discard timer may be set for the second-type PDU set.

The first-type PDU set and the second-type PDU set shown in Table 1 are used as an example. For each PDCP entity of the terminal device, the network may separately set two candidate time values for a discard timer of the first-type PDU set and a discard timer of the second-type PDU set. For example, a first time value list is set for the first-type PDU set. The first time value list includes two candidate time values T1 and T2, where T1 = 35 ms, and T2 = 15 ms. A second time value list is set for the second-type PDU set. The second time value list includes two candidate time values T3 and T4, where T3 = 30 ms, and T4 = 0 ms. When a network status is normal, duration of the first discard timer corresponding to the first-type PDU set may be set to 35 ms, and duration of the second discard timer corresponding to the second-type PDU set may be set to 30 ms. When the network is congested, the duration of the first discard timer corresponding to the first-type PDU set may be set to 15 ms, and the duration of the second discard timer corresponding to the second-type PDU set may be set to 0 ms. Optionally, the network device may indicate, based on a current network status by using signaling (for example, a MAC control element, MAC CE for short), the terminal device to set or adjust the duration of the discard timer.

It may be understood that some of the foregoing embodiments are described by using the PDCP entity as an example. However, this is not limited in this embodiment of this application. For example, the PDCP entity may alternatively be an RLC entity or an SDAP entity. For example, the PDCP entity is the RLC entity. When data is processed at an RLC layer, a discard timer may also be set based on the manner provided in this embodiment of this application, and transmission control may be performed based on the discard timer.

It may be understood that the "discard timer" may be replaced with another name. A naming manner of the "discard timer" is not limited in this embodiment of this application.

In this embodiment of this application, a plurality of candidate time values may be set for a discard timer corresponding to a type of PDU set, and different candidate time values may be used in different network statuses. When the terminal device starts a service, an initial time value of a discard timer needs to be set. In some embodiments of this application, the network device may indicate, to the terminal device by using first information, an initial time value of a discard timer corresponding to a type of PDU set or several types of PDU sets.

In a possible implementation in which the first information indicates the initial time value of the discard timer, for example, an initial time value of the first discard timer corresponding to the first-type PDU set is configured, the network device may send the first information to the terminal device, where the first information indicates the initial time value of the first discard timer corresponding to the first-type PDU set, and the initial time value may be one of the M1 candidate time values in the first time list corresponding to the first-type PDU set.

Optionally, the first information may be a time value, and the time value may be equal to one of the M1 time values in the first time value list, or may be equal to none of the M1 time value lists. Optionally, the first information may be an index of a time value in the M1 time values in the first time value list. In this manner, the initial time value of the first discard timer is indicated to the terminal device, so that signaling overheads can be reduced.

Optionally, the initial time value indicated by the first information may be a largest time value in the M1 time values in the first time value list. The initial time of the discard timer is set to the largest time value in the first time value list, so that the terminal device sends data as much as possible, to ensure data transmission. The initial time value indicated by the first information may alternatively be a 1^{st} time value in the M1 time values. In this case, the network device may set the 1^{st} time value in the M1 time values in the first time value list to the largest, and indicate the 1^{st} time value to the terminal device by using the first information, so that the terminal device sets the initial time of the discard timer to the largest time value in the first time value list, thereby ensuring data transmission of the terminal device. It may be understood that the initial time value indicated by the first information may also be another time value (for example, a 1^{st} value) in the M1 time values. This is not limited in this embodiment of this application.

Optionally, the first information may further indicate an initial time value of a discard timer corresponding to the second-type PDU set.

In some embodiments of this application, the network device may send the time value list and the first information to the terminal device by using one message. For example, a time value list corresponding to the first-type PDU set and a time value list corresponding to the second-type PDU set are configured. The network device may send RRC signaling to the terminal device. The RRC signaling includes the first time value list corresponding to the first-type PDU set, the second time value list corresponding to the second-type PDU set, and the first information. The first information indicates an initial time of the first discard timer corresponding to the first-type PDU set and an initial time of the second discard timer corresponding to the second-type PDU set.

For example, a data structure of the first time value list, the second time value list, and the first information may be:

| | | | |
|---|---|---|---|
| {35, 15} | Index1 | {30, 0} | Index2 |

A time value list {35, 15} in a 1^{st} information field is the first time value list corresponding to the first-type PDU set, and a subsequent information field carries index1 = 1, indicating that the initial time value of the first discard timer corresponding to the first-type PDU set is a 1^{st} time value in the time value list; a time value list {30, 0} in a 3^{rd} information field is the second time value list corresponding to the second-type PDU set, and a subsequent information field carries index2 = 1, indicating that the initial time value of the second discard timer corresponding to the second-type PDU set is a 1^{st} time value in the time value list.

For example, a data structure of the first time value list, the second time value list, and the first information may be:

| | | | |
|---|---|---|---|
| {35, 15} | {30, 0} | Index1 | Index2 |

For example, another data structure of the first time value list, the second time value list, and the first information may be:

| | | | |
|---|---|---|---|
| {35, 15} | Value1 | {30, 0} | Value2 |

A time value list {35, 15} in a 1^{st} information field is the first time value list corresponding to the first-type PDU set, value1 carried in a subsequent information field is the initial time value of the first discard timer corresponding to the first-type PDU set, and value1 may be equal to 35 or 15, or may be equal to another value; a time value list {30, 0} in a 3^{rd} information field is the second time value list corresponding to the second-type PDU set, value2 carried in a subsequent information field is the initial time value of the second discard timer corresponding to the second-type PDU set, and value2 may be equal to 30 or 0, or may be equal to another value.

For example, another data structure of the first time value list, the second time value list, and the first information may be:

| | | | |
|---|---|---|---|
| {35, 15} | {30, 0} | Vaulel | Value2 |

A time value list {35, 15} in a 1st information field is the first time value list corresponding to the first-type PDU set, a time value list {30, 0} in a subsequent information field is the second time value list corresponding to the second-type PDU set, value1 carried in a subsequent information field is the initial time value of the first discard timer corresponding to the first-type PDU set, where value1 may be equal to 35 or 15, or may be equal to another value, and value2 carried in a subsequent information field is the initial time value of the second discard timer corresponding to the second-type PDU set, where value2 may be equal to 30 or 0, or may be equal to another value.

Optionally, the first information may be specifically a time value (for example, the first time value), and the first time value may be the initial time value of the first discard timer, or initial time values of the first discard timer and the second discard timer. In other words, an initial time value of a corresponding discard timer may be set for each type of PDU set, or a common time value may be set for N PDU set types as initial time values of discard timers corresponding to the N PDU set types.

For example, when a common initial time value of a discard timer is configured for a plurality of PDU set types, a data structure of the RRC signaling may be:

| | | |
|---|---|---|
| {35, 15} | {30, 0} | Value |

A time value list {35, 15} in a 1^{st} information field is the first time value list corresponding to the first-type PDU set, a time value list {30, 0} in a 2^{nd} information field is the second time value list corresponding to the second-type PDU set, and a value carried in a subsequent information field is a time value, indicating that both an initial time value of a discard timer corresponding to the first-type PDU set and an initial time value of a discard timer corresponding to the second-type PDU set are equal to the value.

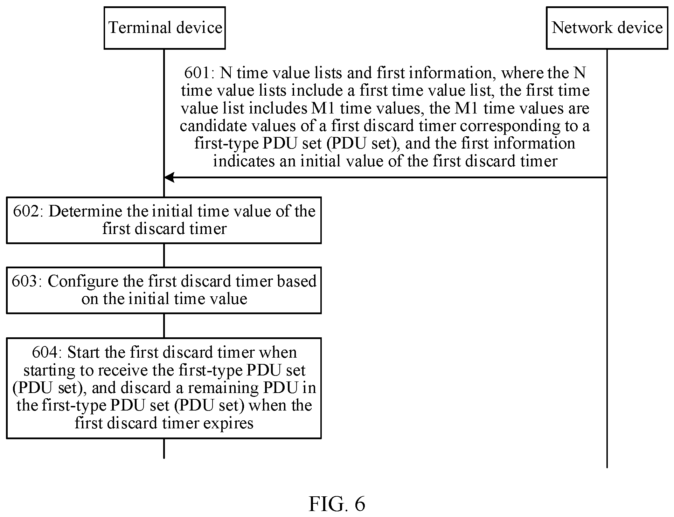

The foregoing is described by using an example in which the time value list corresponding to the first-type PDU set and the time value list corresponding to the second-type PDU set are configured. A case in which there are more types of PDU sets is also applicable to this embodiment of this application. FIG. 6 is an example of a signaling interaction diagram of configuring a time value list and first information by using a message. As shown in FIG. 6, in step 601, a network device sends a message (for example, RRC signaling) to a terminal, where the message carries N time value lists and first information, and each of the N time lists corresponds to one type of PDU set. An implementation of step 602 to step 604 is the same as that of corresponding steps in FIG. 5.

In some other embodiments of this application, the network device may send the time value list to the terminal device by using first signaling, and send the first information to the terminal device by using second signaling. Optionally, the first signaling may be RRC signaling, and the second signaling may be a MAC CE, downlink control information (downlink control information, DCI), a control PDU (control PDU), or the like. Types of the first signaling and the second signaling are not limited in this embodiment of this application.

For example, a time value list corresponding to the first-type PDU set and a time value list corresponding to the second-type PDU set are configured. The network device may send RRC signaling to the terminal device. The RRC signaling includes a first time value list corresponding to the first-type PDU set and a second time value list corresponding to the second-type PDU set. The network device sends second signaling to the terminal device within a time length K, where the second signaling includes the first information. The second signaling further includes a data radio bearer (data radio barrier, DRB) identifier (DRB ID). The DRB ID is a DRB ID corresponding to a processing unit configured to process the first-type PDU set and the second-type PDU set. For example, the processing unit may be a PDCP entity, an RLC entity, or an SDAP entity. This is not limited in this embodiment of this application. The PDCP entity is used as an example. Because the time value list configured by using the first signaling is per PDCP entity (per PDCP entity), a PDCP entity may be identified based on the DRB ID, where an initial time value indicated by the first information is for a discard timer corresponding to a specific type of PDU set configured on the PDCP entity.

Optionally, a value of the time length K may be a predefined value, or may be configured by the network device. This is not limited in this embodiment of this application.

For example, a data structure of the time value list in the first signaling (for example, the RRC signaling) and a data structure of the first information and the DRB ID in the second signaling (for example, the MAC CE) may be: RRC signaling:

| | |
|---|---|
| {35, 15} | {30, 0} |

MAC CE:

| | | |
|---|---|---|
| DRB ID | Index1 | Index2 |

An information field in the RRC signaling is for carrying the first time value list, and a subsequent information field is for carrying the second time value list. An information field in the MAC CE is for carrying a DRB ID. A subsequent information field carries index1 = 1, indicating that an initial time value of a first discard timer corresponding to the first-type PDU set is a 1^{st} time value in the time value list. A subsequent information field carries index2 = 1, indicating that an initial time value of a second discard timer corresponding to the second-type PDU set is a 1^{st} time value in the time value list.

For example, another data structure of the time value list in the first signaling (for example, the RRC signaling) and a data structure of the first information and the DRB ID in the second signaling (for example, the MAC CE) may be: RRC signaling:

| | |
|---|---|
| {35, 15} | {30, 0} |

MAC CE:

| | | |
|---|---|---|
| DRB ID | Value1 | Value2 |

An information field in the MAC CE is for carrying the DRB ID, and value1 carried in a subsequent information field is the initial time value of the first discard timer corresponding to the first-type PDU set, where value1 may be equal to 35 or 15, or may be equal to another value, and value2 carried in a subsequent information field is the initial time value of the second discard timer corresponding to the second-type PDU set, where value1 may be equal to 30 or 0, or may be equal to another value.

For example, another data structure of the time value list in the first signaling (for example, the RRC signaling) and a data structure of the first information and the DRB ID in the second signaling (for example, the MAC CE) may be: RRC signaling:

| | |
|---|---|
| {35, 15} | {30, 0} |

MAC CE:

| | | | | |
|---|---|---|---|---|
| DRB ID | Time value index1 | PDU set type index1 | Time value index2 | PDU set type index2 |

An information field in the MAC CE is for carrying the DRB ID, a subsequent information field carries an index of a time value in the first time value list, and a subsequent information field carries a type index of the first-type PDU set. The two information fields may indicate an initial time value of the first discard timer corresponding to the first-type PDU set. Similarly, the last two information fields may indicate an initial time value of the second discard timer corresponding to the second-type PDU set.

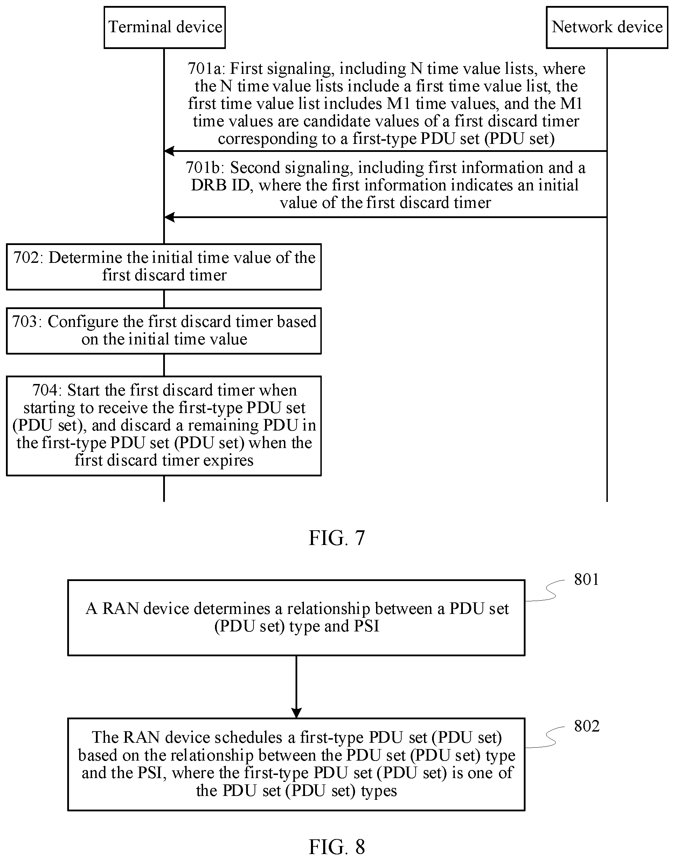

The foregoing is described by using an example in which the time value list corresponding to the first-type PDU set and the time value list corresponding to the second-type PDU set are configured. A case in which there are more types of PDU sets is also applicable to this embodiment of this application. FIG. 7 is an example of a signaling interaction diagram of configuring a time value list and first information by using two pieces of signaling. As shown in FIG. 7, in step 701a, a network device sends first signaling (for example, RRC signaling) to a terminal, where the first signaling carries N time value lists, and each of the N time lists corresponds to one type of PDU set. In step 701b, the network device sends second signaling (for example, a MAC CE) to the terminal device, where the second signaling carries first information and a DRB ID. An implementation of step 702 to step 704 is the same as that of corresponding steps in FIG. 5.

When the time value list and the first information are configured by using two pieces of signaling, if the terminal device does not receive the second signaling within the time length K, in a possible implementation, the terminal device may select, according to a preset rule, a time value from the time value list to set an initial time value of the discard timer. For example, the terminal device may select a largest value in the time value list, or select a 1^{st} time value in the time value list. This is not limited in this embodiment of this application. A first-type PDU set is used as an example. The terminal device may determine a largest value or a 1^{st} time value in M1 time values in the first time value list as an initial time value of a first discard timer.

In another possible implementation, if the terminal device does not receive the second signaling within the time length K, the terminal device may determine a preset time value (for example, a default time value) as the initial time value of the discard timer. A first-type PDU set is used as an example. The terminal device may determine a time value that is set by default as an initial time value of a first discard timer.

In another possible implementation, if the terminal device does not receive the second signaling within the time length K, the terminal device may ignore a time value list configured by using the first signaling, and set a discard timer in a manner defined in a current protocol. For example, for each type of PDU set, duration of a discard timer corresponding to the type of PDU set is set based only on a default time value.

Step 502: The terminal device determines the initial time value of the first discard timer corresponding to the first-type PDU set.

In a possible implementation, for example, the initial time value of the first discard timer corresponding to the first-type PDU set is set. The terminal device may select, according to a preset rule, a time value from the first time value list corresponding to the first-type PDU set to set the initial time value of the first discard timer. For example, the rule may be: selecting the largest time value in the first time value list, or selecting the 1^{st} time value in the first time value list. The rule is not limited in this embodiment of this application. Similarly, the initial time value of the second discard timer corresponding to the second-type PDU set may also be selected from the second time value list according to a preset rule.

Optionally, if the rule is selecting the 1^{st} time value in the time value list as the initial time value of the discard timer, when setting the time value list, the network device may arrange, based on a current network status, a time value that matches the current network status in the first place in the time value list. For example, the first-type PDU set and the second-type PDU set shown in Table 1 are used as an example. If the current network status is good, or a network status is good in most time, the network device may set the following time value lists:
the first time value list corresponding to the first-type PDU set is {35 ms, 15 ms}; and
the second time value list corresponding to the second-type PDU set is {30 ms, 0 ms}.

In another possible implementation, the network device indicates the initial time value of the discard timer by using the first information. Correspondingly, the terminal device may determine an initial time value of a corresponding discard timer based on the initial time value of the discard timer indicated by using the first information.

Step 503: The terminal device configures the first discard timer based on the initial time value.

Setting the duration of the first discard timer based on the initial time value means setting the duration of the first discard timer to be equal to the initial time value. After being started, the first timer starts counting down from the initial time value, and the first discard timer expires when the countdown is zero.

Step 504: The terminal device controls transmission of a PDU in the first-type PDU set based on the first discard timer. The first-type PDU set is used as an example. In this step, the terminal device starts the first discard timer when starting to receive the first-type PDU set, and discards a remaining PDU in the first-type PDU set when the first discard timer expires, where the remaining PDU is a PDU to be transmitted in the first-type PDU set when the first discard timer expires.

"Starting to receive the first-type PDU set" may be understood as: for any PDU set belonging to the first-type PDU set, a moment at which a 1^{st} PDU of the PDU set is received, a moment at which a 1^{st} bit is received, or a moment at which a 1^{st} byte is received. Alternatively, it may be understood as a moment at which a last PDU in the PDU set is received, a moment at which a last bit is received, or a moment at which a last byte is received. Alternatively, it may be understood as a moment at which all PDUs in the PDU set are received, a moment at which all bytes are received, or a moment at which all bits are received.

In a possible implementation, the terminal device may perform transmission control based on a discard timer per PDU set. For example, the first-type PDU set shown in Table 1 is used as an example. The first-type PDU set may include a PDU set whose PSI is equal to 0, a PDU set whose PSI is equal to 1, and a PDU set whose PSI is equal to 2. For the PDU set whose PSI is equal to 0, if a data packet belonging to the PDU set is delivered from an upper layer to the PDCP entity, and the PDCP entity determines that the data packet is a 1^{st} data packet in the PDU set, a discard timer corresponding to the PDU set is started. An initial time value of the discard timer is equal to the initial time value of the first discard timer corresponding to the first-type PDU set, and the first discard timer starts counting down after being started. During running of the first discard timer, the PDU is sent, and a plurality of data packets belonging to the PDU set are transferred from the upper layer to the PDCP entity. When the discard timer corresponding to the PDU expires, if there are still PDUs that belong to the PDU set and that have not been sent in the buffer of the PDCP entity, the PDCP entity deletes these PDUs from the buffer. Further, the discard timer may be deleted.

Similarly, for a PDU set whose PSI is equal to 1 and a PDU set whose PSI is equal to 2, corresponding discard timers may be started according to the foregoing method, and initial time values of the discard timers corresponding to the PDU set whose PSI is equal to 1 and the PDU set whose PSI is equal to 2 are equal to the initial time value of the first discard timer corresponding to the first-type PDU set.

When the terminal device needs to switch, based on indication information sent by the network device, a time value of the first discard timer corresponding to the first-type PDU set to a 2^{nd} time value 15 ms in the first time list, the terminal device may set duration of discard timers corresponding to all PDU sets whose PSI ranges from 0 to 2 to 15 ms.

In another possible implementation, the terminal device may perform transmission control based on a discard timer per PDU. For example, the first-type PDU set shown in Table 1 is still used as an example. For the PDU set whose PSI is equal to 0, if a data packet belonging to the PDU set is delivered from an upper layer to the PDCP entity, and the PDCP entity determines that the data packet is a 1^{st} data packet in the PDU set, a discard timer corresponding to the PDU is started (for ease of description, the discard timer is referred to as a discard timer herein). In addition, duration of the discard timer is set based on the initial time value of the first discard timer that corresponds to the first-type PDU set and that is determined according to the foregoing method, and the discard timer starts counting down after being started. During running of the discard timer, the PDU is sent, and a plurality of PDUs belonging to the PDU set are transferred from the upper layer to the PDCP entity. When the discard timer expires, if there are still PDUs that belong to the PDU set and that have not been sent in the buffer of the PDCP entity, the PDCP entity deletes these PDUs from the buffer. Further, the discard timer may be deleted.

In this embodiment of this application, when determining that the network is congested, the network device may send the indication information (for example, send the indication information by using DCI or a MAC CE) to the terminal device, to indicate the terminal device to switch duration of a discard timer corresponding to each PDU set type to duration used in a congested state in a corresponding time value list. After determining that the network is restored, the network device may send the indication information (for example, send the indication information by using DCI or a MAC CE) to the terminal device, to indicate the terminal device to switch duration of a discard timer corresponding to each PDU set type to duration used in a normal state in a corresponding time value list.

In the procedure shown in FIG. 5, FIG. 6, or FIG. 7, the network device may configure a time value list corresponding to each PDU set type and an initial time value of a discard timer for the terminal device, so that the terminal device can configure a discard timer of a corresponding PDU set based on the initial time value and the time value list, to perform transmission scheduling on a terminal device side based on the discard timer.

In some embodiments of this application, for uplink transmission, when determining, based on the network status, that a current network is congested, the network device may send indication information (for example, by using DCI or a MAC CE) to the terminal device. The indication information indicates a data rate of the terminal device in first duration in the future. After receiving the indication information, the terminal device may determine, based on PSI of a to-be-sent PDU buffered by the terminal device, a PDU set type to which the to-be-sent PDU belongs, to determine whether to discard the PDU or transmit the PDU. For example, if the PDU belongs to a PDU set type with a high importance level, the terminal device may determine to send the PDU; otherwise, the terminal device may determine to discard the PDU. If the PDU is to be transmitted, the PDU that is determined to be sent may be sent, based on the data rate indicated by the network device, at the data rate in the first duration indicated by the network device.

To better perform transmission scheduling, embodiments of this application provide a solution in terms of transmission scheduling. In terms of transmission scheduling, in embodiments of this application, the network device may obtain a relationship between a PDU set type and PSI, and perform transmission scheduling based on the relationship, to implement differentiated transmission scheduling based on the PDU set type.

Based on the architecture of the network system shown in FIG. 1 and the content described in the foregoing related technologies, FIG. 8 is an example of a schematic flowchart of a transmission scheduling method according to an embodiment of this application. The solution in FIG. 8 is described by using a network apparatus as an example. Specifically, the network apparatus is a network device. For example, the network device is a RAN device. For related descriptions of the network apparatus, refer to the foregoing content. Details are not described again.

FIG. 8 is a schematic flowchart of a transmission scheduling method according to an embodiment of this application. The procedure may include the following steps.

Step 801: The RAN device determines a relationship between a PDU set type and PSI.

In a possible implementation, the relationship between the PDU set type and the PSI may be specifically represented as a correspondence table between a PDU set type and a PSI range. Different PDU set types correspond to different PSI ranges. An example of the relationship between the PDU set type and the PSI may be shown in Table 1. In other words, if the RAN device obtains the correspondence table between the PDU set type and the PSI range, the RAN device may directly determine the relationship between the PDU set type and the PSI range based on the correspondence table.

In another possible implementation, the relationship between the PDU set type and the PSI may be specifically represented as M PSI thresholds, where M is an integer greater than or equal to 1. The M PSI thresholds divide PSI into M+1 PSI ranges, and each PSI range corresponds to one PDU set type. An example in which the PSI is classified into M+1 PDU set types by using the M thresholds may be shown in FIG. 2. In other words, if the RAN device obtains the M PSI thresholds, the RAN device may divide the PSI into the M+1 PSI ranges based on the M PSI thresholds, and the RAN device may determine a PDU set type corresponding to each PSI range, that is, determine the relationship between the PDU set type and the PSI.

In a possible implementation, the relationship between the PDU set type and the PSI may be predefined on the RAN device. For example, the correspondence table between the PDU set type and the PSI range may be predefined. For another example, the M PSI thresholds may be predefined.

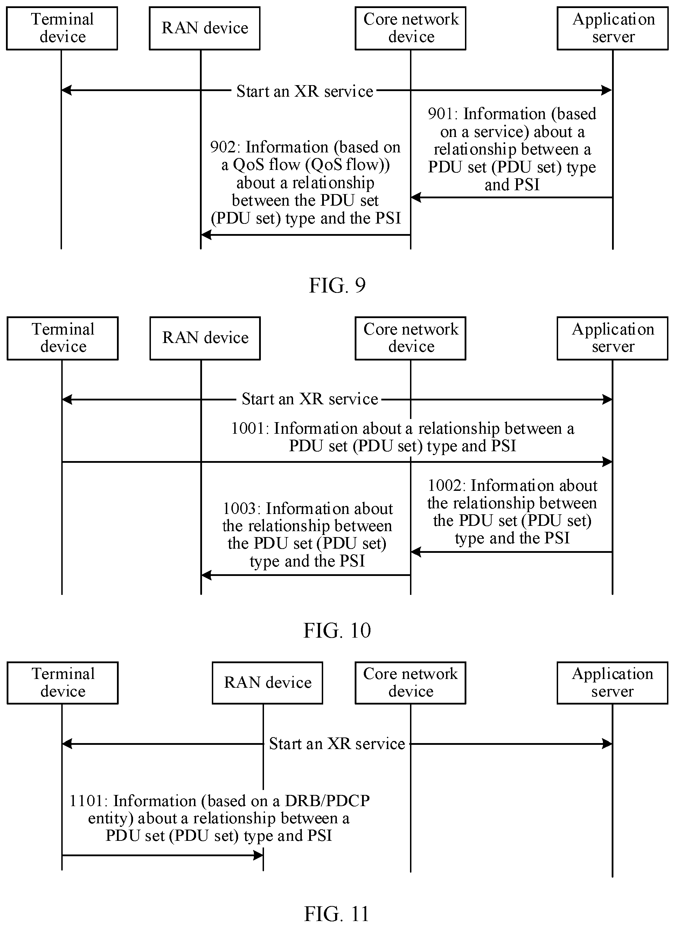

In another possible implementation, the relationship between the PDU set type and the PSI is from a core network device. Optionally, for downlink transmission, the core network device may send, to the RAN device, information that is about the relationship between the PDU set type and the PSI and that is from an application server and for downlink transmission. An example may be shown in FIG. 9. Optionally, for uplink transmission, the terminal device may send, to the application server, the information that is about the relationship between the PDU set type and the PSI and that is for uplink transmission, then the application server sends the information to the core network device, and the core network device sends the information to the RAN device. An example may be shown in FIG. 10.

In another possible implementation, for uplink transmission, the relationship between the PDU set type and the PSI is from the terminal device. An example may be shown in FIG. 11.

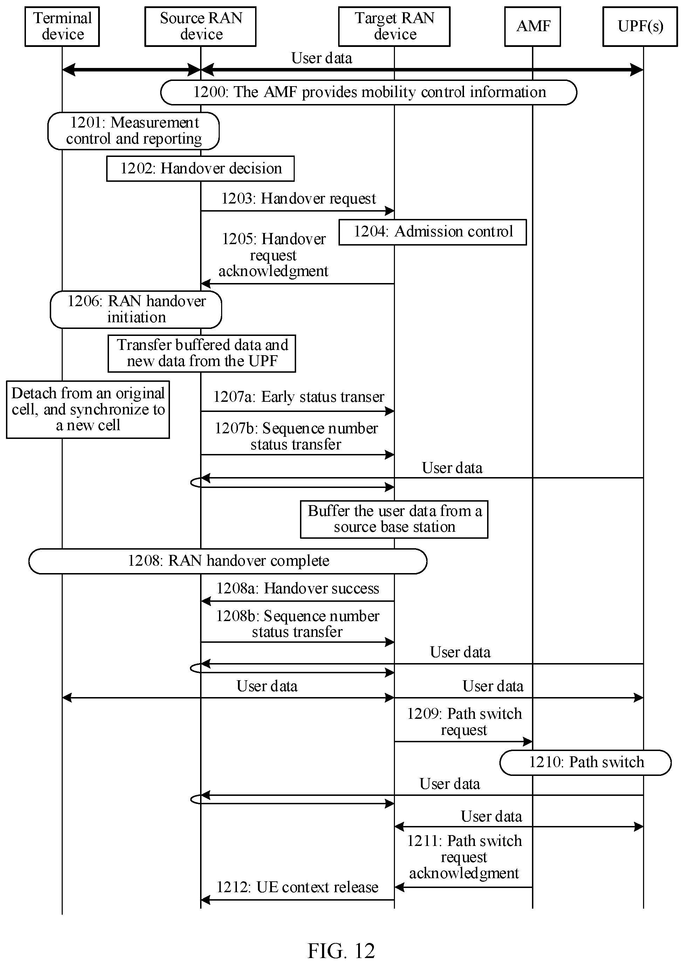

In another possible implementation, in a RAN handover process, the terminal device, the core network device, or a source RAN device may send the information about the relationship between the PDU set type and the PSI to a target RAN device. An example may be shown in FIG. 12.

Step 802: The RAN device schedules a first-type PDU set based on the relationship between the PDU set type and the PSI, where the first-type PDU set is one of the PDU set types.

In a possible implementation, the RAN device may configure, for the terminal device based on the relationship between the PDU set type and the PSI, a candidate time value and/or an initial time value of a discard timer corresponding to the PDU set type, to schedule a PDU set or a PDU. For example, for a PDU set of a high importance level, a candidate time value of a discard timer of the PDU set may be larger.

In another possible implementation, PSI may be encapsulated in an information field, visible to the RAN device, of a packet. In this way, for downlink transmission, the RAN device may obtain PSI of a PDU, determine, based on the PSI and the foregoing correspondence information, a type of PDU set to which the PDU belongs, and then schedule the PDU based on a current network status. For example, if a current network is congested and the PDU belongs to a PDU set type of a low importance level, the PDU may be discarded to alleviate network congestion. If the PDU belongs to a PDU set type of a high importance level, the PDU may be preferentially scheduled.

According to the procedure shown in FIG. 8, the RAN device may perform differentiated transmission scheduling based on the PDU set type and based on the relationship between the PDU set type and the PSI.

FIG. 9 is a schematic flowchart showing that a core network device sends information about a relationship between a PDU set type and PSI to a RAN device according to an embodiment of this application. As shown in the figure, the procedure may include the following steps.

Step 901: After a service (for example, an XR service) starts, an application server that provides the service sends, to the core network device, information that is about a relationship between a PDU set type and PSI and that is for the service.

Optionally, an example of the information about the relationship between the PDU set type and the PSI may be shown in Table 1, and another example may be a PSI threshold shown in FIG. 2.

Optionally, the information about the relationship between the PDU set type and the PSI may be for transmission scheduling during downlink transmission.

Step 902: After receiving the information about the relationship between the PDU set type and the PSI from the application server, the core network device sends the information about the relationship between the PDU set type and the PSI to the RAN device.

In a possible implementation, the core network device may directly send the information about the relationship between the PDU set type and the PSI from the application server to the RAN device.

In another possible implementation, the information that is about the relationship between the PDU set type and the PSI and that is from the application server is per service. Correspondingly, the core network device converts the information that is about the relationship between the PDU set type and the PSI and that is per service into information that is about the relationship between the PDU set type and the PSI and that is per quality of service (QoS) flow (QoS flow) (per QoS flow), and sends the converted information that is about the relationship between the PDU set type and the PSI and that is per QoS flow to a terminal device. For example, the core network device receives four PSI thresholds from the application server. The four PSI thresholds are at a granularity of an IP flow or an XR service. The core network device may aggregate the four PSI thresholds into two PSI thresholds based on a local policy, that is, aggregate the four PSI thresholds at the granularity of the IP flow or the XR service into two PSI thresholds at a granularity of a QoS flow. For example, the information that is about the relationship between the PDU set type and the PSI and that is received by the core network device from the application server is: PSI = 0 to 2 corresponds to a first-type PDU set, PSI = 3 to 5 corresponds to a second-type PDU set, PSI = 6 and 7 corresponds to a third-type PDU set, and PSI = 8 to 15 corresponds to a fourth-type PDU set. The core network device may aggregate the foregoing four PDU set types into: PSI = 0 to 7 corresponds to a first-type PDU set, and PSI = 8 to 15 corresponds to a second-type PDU set.

In a possible implementation, the core network device is an AMF.

FIG. 10 is a schematic flowchart showing that a core network device sends information about a relationship between a PDU set type and PSI to a RAN device according to an embodiment of this application. As shown in the figure, the procedure may include the following steps.

Step 1001: After a service (for example, an XR service) starts, a terminal device sends information that is about a relationship between a PDU set type and PSI and that is for the service to an application server.

Optionally, an example of the information about the relationship between the PDU set type and the PSI may be shown in Table 1, and another example may be a PSI threshold shown in FIG. 2.

Optionally, the information about the relationship between the PDU set type and the PSI may be for transmission scheduling during uplink transmission.

Step 1002: After receiving the correspondence information, the application server sends the information about the relationship between the PDU set type and the PSI to the core network device.

Step 1003: After receiving the information about the relationship between the PDU set type and the PSI from the application server, the core network device sends the information about the relationship between the PDU set type and the PSI to the RAN device.

FIG. 11 is a schematic flowchart showing that a terminal device sends information about a relationship between a PDU set type and PSI to a RAN device according to an embodiment of this application. As shown in the figure, the procedure may include the following steps.

Step 1101: After a service (for example, an XR service) starts, the terminal device sends information that is about a relationship between a PDU set type and PSI and that is for the service to a RAN device.

Optionally, an example of the information about the relationship between the PDU set type and the PSI may be shown in Table 1, and another example may be a PSI threshold shown in FIG. 2.

Optionally, the information about the relationship between the PDU set type and the PSI is per DRB/PDCP entity (per DRB/PDCP entity).

FIG. 12 is a schematic flowchart showing that information about a relationship between a PDU set type and PSI is sent to a target RAN device in a RAN handover process according to an embodiment of this application. As shown in the figure, the procedure may include the following steps.

Step 1200: An AMF provides mobility control information. In this process, the AMF may provide the mobility control information for a source RAN device and the target RAN device.

Step 1201: A terminal device performs a measurement control and reporting process. In this process, the terminal device may perform measurement and report a measurement result to the source RAN device.

Step 1202: The source RAN device determines, based on the measurement result of the terminal device, to hand over the terminal device to the target RAN device.

Step 1203: The source RAN device sends a handover request to the target RAN device.

Optionally, the handover request may carry information about a relationship between a PDU set type and PSI. For example, an information element may be extended in the message to carry the information about the relationship between the PDU set type and the PSI.

Step 1204: The target RAN device performs admission control.

Step 1205: The target RAN device sends a handover request acknowledgment to the source RAN device.

Step 1206: The terminal device and the source RAN device perform a RAN handover initiation process. During this period, the source RAN device transfers buffered data and new data from a UPF. Then, the terminal device detaches from an original cell, and synchronizes to a new cell.

Step 1207a: The source RAN device sends an early status transer (EARLY STATUS TRANSER) to the target RAN device.

Step 1207b: The source RAN device sends sequence number status transfer (EARLY STATUS TRANSER) to the target RAN device.

Then, user data is transmitted from the UPF to the source RAN device, and forwarded by the source RAN device to the target RAN device, and the target RAN device buffers the user data from the source RAN device.

Step 1208: The terminal device and the target RAN device perform a RAN handover complete process.

Optionally, the terminal device may send the information about the relationship between the PDU set type and the PSI to the target RAN device in this process. For example, an information element may be extended in an RRC reconfiguration complete message sent by the terminal device to the target RAN device, to carry the information about the relationship between the PDU set type and the PSI.

Step 1208a: The target RAN device sends a handover success message to the source RAN device.

Step 1208b: The source RAN device sends sequence number status transfer (EARLY STATUS TRANSER) to the target RAN device.

Then, user data is transmitted from the UPF to the source RAN device, and forwarded by the source RAN device to the target RAN device, and the target RAN device buffers the user data from the source RAN device. Data transmission is performed between the terminal device and the target RAN device and between the target RAN device and the UPF. Step 1209: The target RAN device sends a path switch request to the AMF.

Step 1210: The AMF and the UPF perform path switch. Then, data transmission is performed between the UPF and the target RAN device.

Step 1211: The AMF sends a path switch request acknowledgment message to the target RAN device.

Optionally, the path switch request acknowledgment message may carry the information about the relationship between the PDU set type and the PSI. For example, an information element may be extended in the message to carry the information about the relationship between the PDU set type and the PSI.

Step 1212: The target RAN device indicates the source RAN device to release a UE context.

To better perform transmission scheduling, embodiments of this application provide a solution in terms of transmission feedback. In terms of transmission feedback, in some embodiments of this application, the terminal device may feed back latency jitter information of a PDU set to a network device, so that the network device can perform transmission scheduling on the terminal device based on the latency jitter information reported by the terminal device. Further, in embodiments of this application, the terminal device can be prevented from frequently reporting the latency jitter information. In this way, signaling overheads can be reduced. In addition, the network device can be prevented from performing frequent transmission scheduling based on the latency jitter information frequently reported by the terminal device, thereby improving data transmission stability.

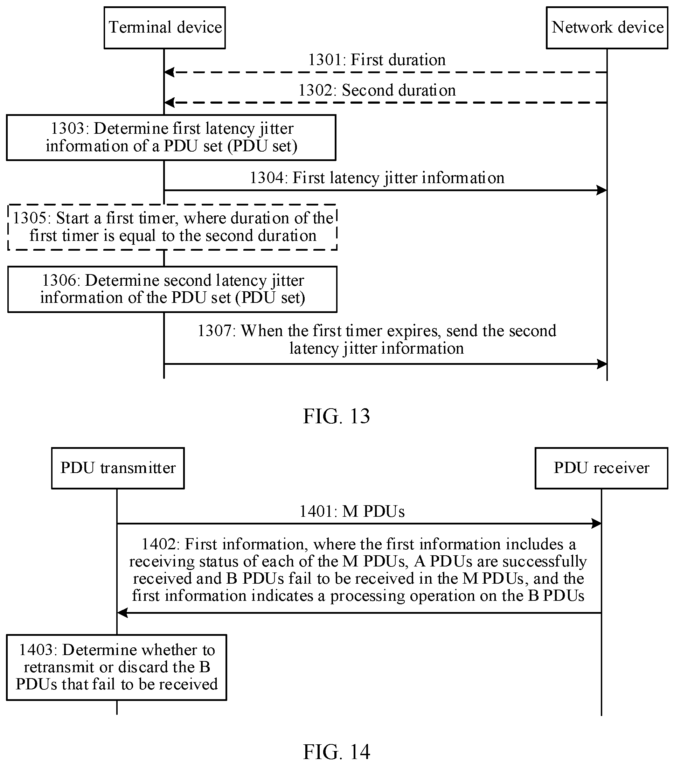

Based on the architecture of the network system shown in FIG. 1 and the content described in the foregoing related technologies, FIG. 13 is an example of a schematic flowchart of a transmission feedback method according to an embodiment of this application. The solution in FIG. 13 is described by using an example in which a network apparatus and a terminal apparatus interact with each other. Specifically, the procedure is described by using an example in which the network apparatus is a network device and the terminal apparatus is a terminal device. For related descriptions of the network apparatus and the terminal apparatus, refer to the foregoing content. Details are not described again.

FIG. 13 is a schematic flowchart of a transmission feedback method according to an embodiment of this application. As shown in FIG. 13, the procedure may include the following steps.

Step 1303: A terminal device determines first latency jitter information of a PDU set.

For a PDU set (video frame) in an XR service, from a perspective of uplink transmission, the PDU set is usually sent based on a specific period. For example, a frame rate of a video frame is 60 fps, indicating that 60 frames are transmitted per second, that is, one frame is sent every 16.67 ms. Due to various component reasons and other reasons such as service packets occupying pipelines, latency jitter occurs when a frame is delivered from an application layer of the terminal device to a protocol stack. In other words, the frame may arrive earlier or later than a theoretical arrival moment, that is, latency jitter occurs. The terminal device may periodically collect statistics on latency jitter information, and report the latency jitter information to a network device (for example, a base station), so that the network device can adjust configured grant (configured grant, CG) configuration and/or discontinuous reception (discontinuous reception, DRX) configuration based on the latency jitter information reported by the terminal device. For uplink transmission, latency jitter information of a to-be-sent PDU may be time statistics information of delivering the PDU from an upper layer (for example, an application layer or a higher layer in a protocol stack) to a lower layer (for example, a lower layer in the protocol stack, for example, a PDCP entity) inside the terminal device, and may specifically include time statistics information of delivery from the upper layer to an entity or some entities (or referred to as processing units) in the protocol stack. The entity (or the processing unit) may be, for example, a PDCP entity or an RLC entity. This is not limited in this embodiment of this application. For downlink transmission, latency jitter information of a received PDU may be time statistics information of transmitting the PDU from a lower layer (for example, a physical layer or a lower layer in a protocol stack) to an upper layer (for example, an application layer or a higher layer in a protocol stack) inside the terminal device.

For a PDU set, an operation of determining latency jitter information of the PDU set may be understood as: collecting statistics on latency jitter information of a PDU in the PDU set, where the latency jitter information of the PDU set may include latency jitter information of one or more PDUs in the PDU set. Another perspective may be as follows: After latency jitter information of one or more PDUs in one PDU set is obtained through statistics collection, an algorithm (for example, computing an average value, a maximum value, or a minimum value) is performed on the latency jitter information of the one or more PDUs, to obtain latency jitter information of the PDU set.

Optionally, the first latency jitter information includes one or more of the following: average latency jitter, maximum latency jitter, a latency jitter range, and minimum latency jitter. The average latency jitter may be an average value of latency jitter of the PDU set in a statistical time period. The maximum latency jitter may be a maximum value of the latency jitter of the PDU set in the statistical time period. The minimum latency jitter may be a minimum value of the time jitter of the PDU set in the statistical time period. The latency jitter range may be a range between the maximum value and the minimum value of the latency jitter of the PDU set in the statistical time period.

Optionally, the terminal device may start to collect statistics on the latency jitter information when the latency jitter exceeds a specified threshold.

Step 1304: The terminal device sends the first latency jitter information to the network device.

In this embodiment of this application, a plurality of DRBs may be configured for the terminal device, and one DRB may include a plurality of QoS flows. Alternatively, one or more PDU sessions (PDU session) may be configured for the terminal device, and one PDU session may include one or more QoS flows.

Based on the procedure shown in FIG. 13, in a possible implementation, a PDCP entity is used as an example. In step 1303, the PDCP entity in the protocol stack of the terminal device may collect statistics about latency jitter of PDU sets in QoS flows in one or more DRBs. In step 1304, the terminal device may further send a DRB identifier and a QoS flow identifier that correspond to the first latency jitter information, to indicate that the first latency jitter information is latency jitter information of a PDU set in a QoS flow corresponding to the QoS flow identifier in a DRB corresponding to the DRB identifier.

Optionally, before step 1303, the network device may send the DRB identifier and the QoS flow identifier to the terminal device, to indicate the terminal device to collect statistics on and report latency jitter of a PDU set in a corresponding QoS flow in a corresponding DRB. Regardless of whether the network device sends the DRB identifier and the QoS flow identifier to the terminal device before step 1303, when sending the first time domain jitter information, the terminal device may send the DRB identifier and the QoS flow identifier that correspond to the first latency jitter information.

Optionally, the network device may send the DRB identifier and the QoS flow identifier to the terminal device by using an RRC message. For example, the network device may include the DRB identifier and the QoS flow identifier in a PDCP-Config information field in an RRC reconfiguration message or an OtherConfig information field in the RRC reconfiguration message.

Based on the procedure shown in FIG. 13, in another possible implementation, a PDCP entity is used as an example. In step 1303, the PDCP entity in the protocol stack of the terminal device may collect statistics about latency jitter of PDU sets in QoS flows in one or more PDU sessions. In step 1304, the terminal device may further send a PDU session identifier and a QoS flow identifier that correspond to the first latency jitter information, to indicate that the first latency jitter information is latency jitter information of a PDU set in a QoS flow corresponding to the QoS flow identifier in a PDU session corresponding to the PDU session identifier.

Optionally, before step 1303, the network device may send the PDU session identifier and the QoS flow identifier to the terminal device, to indicate the terminal device to collect statistics on and report latency jitter of a PDU set in a corresponding QoS flow in a corresponding PDU session. Regardless of whether the network device sends the PDU session identifier and the QoS flow identifier to the terminal device before step 1303, when sending the first time domain jitter information, the terminal device may send the PDU session identifier and the QoS flow identifier that correspond to the first latency jitter information.

Optionally, the network device may send the PDU session identifier and the QoS flow identifier to the terminal device by using an RRC message. For example, the network device may include the PDU session identifier and the QoS flow identifier in a PDCP-Config information field in an RRC reconfiguration message or an OtherConfig information field in the RRC reconfiguration message.

Based on the procedure shown in FIG. 13, in a possible implementation, before step 1303, the method may further include the following step:
Step 1301: The network device sends first duration to the terminal device, where the first duration is duration for collecting statistics about latency jitter. Correspondingly, in step 1303, the terminal device may determine the first latency jitter information of the PDU set in the first duration. In other words, the first latency jitter information is a statistical result of latency jitter in the first duration, or a length of a time period for collecting statistics about latency jitter is the first duration.

The first duration is similar to a monitoring window. The terminal device may monitor a latency jitter status in a window of the duration, to avoid a case in which the terminal device frequently reports latency jitter information because frequent instantaneous latency jitter changes exceed a specified threshold, thereby saving network resources, and avoiding frequent CG reconfiguration and/or DRX reconfiguration by the network device based on the latency jitter information.

Based on the procedure shown in FIG. 13, in a possible implementation, before step 1303, the method may further include the following step:
Step 1302: The network device sends second duration to the terminal device.

Correspondingly, after step 1304, the method may further include the following step:
Step 1305: Start a first timer, where duration of the first timer is equal to the second duration. After being started, the first timer starts counting down, and the first timer expires when the countdown reaches zero.

Correspondingly, after step 1305, the method may further include the following step:
Step 1306: The terminal device determines second latency jitter information of the PDU set.

Optionally, the terminal device may collect statistics about the second latency jitter information in the first duration based on the first duration.

Step 1307: When the first timer expires, send the second latency jitter information to the network device.

The second duration may be understood as a backoff time. To be specific, after the first latency jitter information is sent, even if the terminal device triggers a latency jitter statistics collection operation and obtains the second latency jitter information through statistics collection, the second latency jitter information obtained through statistics collection again can be sent only after the second duration. In this way, compared with a case in which a latency jitter statistics and reporting operation is triggered when latency jitter exceeds a specified threshold, the method provided in this embodiment of this application may avoid frequent reporting of latency jitter information when latency jitter is significant and frequent, thereby saving network resources, and avoiding frequent CG reconfiguration and/or DRX reconfiguration by the network device based on the latency jitter information.

In a possible implementation, if the terminal device does not trigger the latency jitter statistics collection operation (for example, the latency jitter does not exceed the specified threshold) after sending the first latency jitter information, the terminal device does not trigger a latency jitter information reporting operation when the first timer expires.

In a possible implementation, if the terminal device triggers the latency jitter statistics collection operation (for example, the latency jitter exceeds the specified threshold) after sending the first latency jitter information, but the first timer expires before statistical duration reaches the first duration, the terminal device may report latency jitter information currently obtained through statistics collection to the network device, or may not trigger a latency jitter information reporting operation.

In a possible implementation, the first duration and the second duration may be configured for the terminal device by using one message.

In a possible implementation, the second duration is predefined. Correspondingly, the network device may not need to send the second duration to the terminal device.

It may be understood that a time sequence relationship of the steps in the procedure shown in FIG. 13 is merely an example, and the time sequence relationship of the steps is not limited in this embodiment of this application. For example, a sequence of step 1301 and step 1302 may be interchanged. To be specific, the second duration may be first configured for the terminal device, and then the first duration is configured for the terminal device. For another example, step 1301 and step 1302 may be one step. To be specific, the network device may send a message to the terminal device, where the message carries the first duration and the second duration.

In a possible implementation, the terminal device may send capability information of the terminal device to the network device, where the capability information indicates that the terminal device has a capability of determining latency jitter information of a PDU set. Correspondingly, when determining that the terminal device has the capability, the network device sends related configuration information for latency jitter statistics collection to the terminal device. For example, the configuration information may include the first duration and/or the second duration.

To better perform transmission scheduling, embodiments of this application provide a solution in terms of transmission feedback. In terms of transmission feedback, in some other embodiments of this application, a data receiver device may provide feedback to a data transmitter device based on a PDU receiving status, so that the data transmitter device can perform, for a PDU that fails to be received, a corresponding transmission scheduling processing operation based on an indication of the data receiver.

Based on the architecture of the network system shown in FIG. 1 and the content described in the foregoing related technologies, FIG. 14 is an example of a schematic flowchart of a transmission feedback method according to an embodiment of this application. The solution in FIG. 14 is described by using an example in which a data receiver apparatus and a data transmitter apparatus interact with each other. The data receiver apparatus and the data transmitter apparatus may be respectively a terminal apparatus and a network apparatus, or one terminal apparatus and another terminal apparatus. For related descriptions of the network apparatus and the terminal apparatus, refer to the foregoing content.

It may be understood that a PDU receiving apparatus in this embodiment of this application may be a hardware apparatus, or may be an apparatus implemented by software, for example, a PDCP entity or an RLC entity in an internal protocol stack of a device.

FIG. 14 is a schematic flowchart of a transmission feedback method according to an embodiment of this application. As shown in FIG. 14, the procedure may include the following steps.

Step 1401: A PDU transmitter sends M PDUs, where M is an integer greater than or equal to 1. Correspondingly, a PDU receiver receives the M PDUs.

Step 1402: The PDU receiver sends first information to the PDU transmitter, where the first information includes a receiving status of each of the M PDUs, A PDUs are successfully received and B PDUs fail to be received in the M PDUs, the first information indicates a processing operation on the B PDUs, and both A and B are integers greater than or equal to 0. Correspondingly, the PDU transmitter receives the first information.

When A is equal to 0, it indicates that all the M PDUs are successfully received; and when B is equal to 0, it indicates that all the M PDUs fail to be received.

It may be understood that the first information is status feedback information, and is for feeding back a receiving status of a PDU. Optionally, the first information may be a status feedback report newly defined in this embodiment of this application, or may be obtained by extending a status feedback report defined in a current protocol, so that the status feedback report may include information newly defined in this embodiment of this application.

In a possible implementation, a trigger condition for feeding back the first information may be one or more of the following: an upper layer requests a PDCP entity for retransmission, the upper layer requests PDCP data recovery, the upper layer requests uplink data switch, and the upper layer requests the PDCP entity for reestablishment. Optionally, the trigger condition for feeding back the first information may alternatively be that a timer expires. Duration of the timer may be configured by a network device or agreed upon in advance. The timer may be started or restarted after a feedback operation is performed on the first information once.

In a possible implementation, the first information includes first indication information, and the first indication information indicates the processing operation on the B PDUs that fail to be received. For example, the first indication information may indicate to retransmit the B PDUs, or indicate to discard the B PDUs. In other words, the first indication information may indicate, by using different values of the first indication information, an operation to be performed on a PDU that fails to be received. For example, when the first indication information is equal to a first value (for example, 0), it indicates that a PDU that fails to be received is retransmitted; or when the first indication information is equal to a second value (for example, 1), it indicates that a PDU that fails to be received is discarded. In a possible implementation, the first information includes second indication information, where the second indication information indicates to discard the B PDUs that fail to be received. If the PDU receiver determines to retransmit a PDU that fail to be received, the PDU receiver may not send the second indication information. In other words, if the first information includes the second indication information, it indicates that the PDU receiver indicates the PDU transmitter to discard a PDU that fails to be received. If the first information does not include the second indication information, it indicates that the PDU transmitter is indicated by default to retransmit a PDU that fails to be received.

In a possible implementation, the first indication information and/or the second indication information may be separately sent, instead of being included in the first information for sending.

Step 1403: After receiving the first information, the PDU transmitter determines whether to retransmit or discard the B PDUs that fail to be received.

Optionally, if the PDU transmitter determines, based on the first information, to retransmit the B PDUs that fail to be received, the PDU transmitter retransmits the B PDUs; otherwise, the PDU transmitter may delete the B PDUs without waiting for a timer corresponding to the B PDUs to expire.

Further, if the PDU transmitter determines to discard a PDU that fails to be received, the PDU transmitter may further count, based on the PDU that fails to be received and indicated in the first information, a quantity of PDUs that fail to be received in a PDU set to which the PDU belongs. If the quantity of PDUs that fail to be received in the PDU set meets a first condition, the PDU set may be discarded. A frame usually includes a plurality of PDUs. If one or more of these PDUs are lost and a loss ratio exceeds a specific value, the PDU receiver may fail to decode the frame even if a remaining PDU is correctly sent. Therefore, according to the method provided in this embodiment of this application, the PDU transmitter may delete, in advance, the PDUs that fail to be received, and may delete, in advance, other PDUs in a frame (that is, a PDU set) to which the PDUs belong and no longer send the other PDUs, thereby reducing network resource overheads.

Optionally, that the first condition is met may be that a quantity of PDUs that fail to be received in a PDU set is greater than a specified threshold. Alternatively, that the first condition is met may be that a ratio of a quantity of PDUs that fail to be received in a PDU set to a total quantity of PDUs in the PDU set is greater than a specified threshold. According to the procedure shown in FIG. 14, the data receiver may indicate, in an explicit manner (for example, explicit indication by using the first indication information or second indication information) or an implicit manner (for example, the first information does not include the second indication information) by using the first information that is for feeding back a status report, operation behavior of the PDU receiver for a PDU that fails to be received, so that the PDU transmitter can perform, based on a requirement of the receiver, a corresponding operation on the PDU that fails to be received.

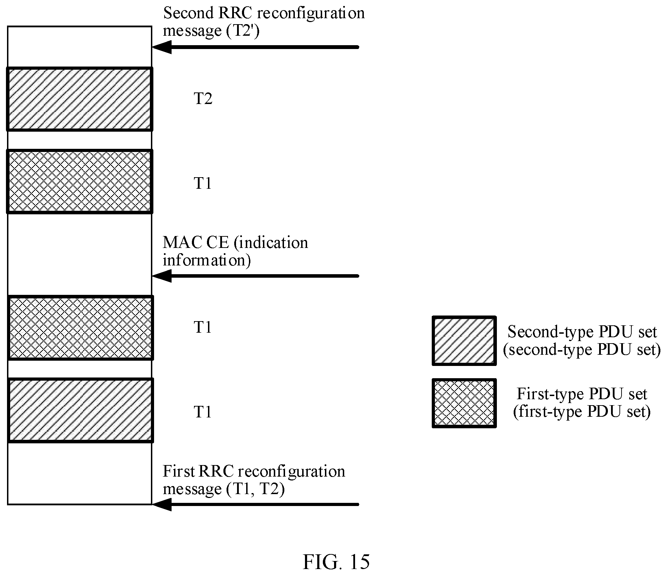

In some other embodiments of this application, the network device configures two discard timers for each PDCP entity of a terminal device, which are referred to as a first discard timer and a second discard timer herein. Duration of the two discard timers is usually not equal, and the duration of the first discard timer is greater than the duration of the second discard timer. When a network is in a normal state, or when the network is not congested, both a first-type PDU set and a second-type PDU set use the first discard timer. When the network is congested, the network device sends indication information to the terminal device to activate the second discard timer. After receiving the indication information, the terminal device uses the second discard timer for a subsequently arrived second-type PDU set. After network congestion is relieved, the network device sends indication information to the terminal device to deactivate the second discard timer, and the terminal device uses the first discard timer for a subsequently arrived second-type PDU set based on the indication information. The network may reconfigure the duration of the first discard timer and/or the duration of the second discard timer at any moment. For example, FIG. 15 is a diagram of configuration of a discard timer.

As shown in FIG. 15, the network device sends a first RRC reconfiguration (RRR CReconfiguration) message to the terminal device, where the message includes a first time value T1 configured for the first discard timer and a time value T2 configured for the second discard timer. After receiving the message, the terminal device sets the duration of the first discard timer based on the first time value T1, so that both a first-type PDU set and a second-type PDU set use the first discard timer. Then, the network device sends a MAC CE to the terminal device, where the MAC CE includes indication information, to activate the second discard timer. After receiving the MAC CE, the terminal device sets the duration of the second discard timer based on the second time value T2, so that the second-type PDU set uses the second discard timer, and the first-type PDU set still uses the first discard timer. Then, the network device may further send a second RRC reconfiguration message, where the second RRC reconfiguration message includes a time value T2', for reconfiguring the duration of the second discard timer.

Usually, the duration T1 of the first discard timer that initially takes effect by the terminal device is longer, and both the first-type PDU set and the second-type PDU set use the first discard timer with a larger time value. When an XR service is started, if the network is in a congested state, the network device needs to reconfigure the duration of the second discard timer for the terminal device based on the congested state, and send a MAC CE to the terminal device to indicate the terminal device to activate the second discard timer. Compared with the RRC reconfiguration message, the MAC CE is likely to fail to be transmitted. Once the MAC CE is lost, the network and the terminal device have different understandings of transmission scheduling, which affects service transmission. Similarly, when network congestion is relieved, the foregoing problem also occurs. For example, when network congestion is relieved, the network device sends a MAC CE to the terminal device, to indicate the terminal device to deactivate the second discard timer, so that the terminal device processes the second-type PDU set by using the first discard timer, and continues to transmit the second-type PDU set. However, the terminal device does not receive the MAC CE, and the terminal device still processes the second-type PDU set by using the second discard timer, that is, a frame continues to be lost for the second-type PDU set.

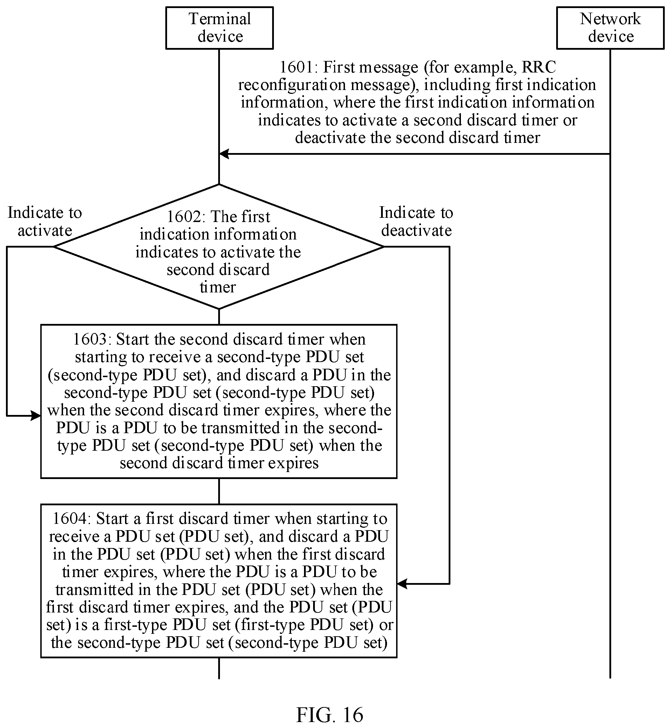

To better perform transmission scheduling, in some embodiments of this application, the network device adds indication information to a message for configuring duration of a discard timer, to indicate the terminal device to activate or not activate the second discard timer, thereby avoiding the foregoing problem caused by activating or deactivating the second discard timer by using the MAC CE. With reference to FIG. 16, the following describes a transmission configuration method provided in an embodiment of this application.

In embodiments of this application, "activate" may be replaced with a term having a similar concept, such as enable, use, start, or initiate, and "deactivate" may be replaced with a term having a similar concept, such as disable, stop using, disable, or terminate. The "discard timer" in embodiments of this application may also be replaced with a "timer", a "PDCP discard timer", a "PDCP discard timer", or the like. In embodiments of this application, each terminal device, a DRB on each terminal device, a PDCP entity on each terminal device, or a logical channel group (logical channel group, LCG) on each terminal device may correspond to one first discard timer, one second discard timer, or one third discard timer.

Based on the architecture of the network system shown in FIG. 1 and the content described in the foregoing related technologies, FIG. 16 is an example of a schematic flowchart of a transmission method according to an embodiment of this application. The solution in FIG. 16 is described by using an example in which a network apparatus and a terminal apparatus interact with each other. Specifically, the procedure is described by using an example in which the network apparatus is a network device and the terminal apparatus is a terminal device. For related descriptions of the network apparatus and the terminal apparatus, refer to the foregoing content. Details are not described again.

FIG. 16 is a schematic flowchart of a communication method according to an embodiment of this application.

As shown in FIG. 16, the procedure may include the following steps.

Step 1601: A network device sends a first message, and correspondingly, a terminal device receives the first message. The first message includes first indication information, and the first indication information indicates to activate a second discard timer or deactivate the second discard timer. The second discard timer is one of the at least two discard timers.

The "activating the second discard timer" may also be explained as "using the second discard timer for a second-type PDU set". The "deactivating the second discard timer" may also be explained as "not using the second discard timer for the second-type PDU set, but using a first discard timer for the second-type PDU set".

Optionally, the first message is an RRC reconfiguration message.

Optionally, the RRC reconfiguration message may be for initially configuring duration of the first discard timer and/or duration of the second discard timer, or may be for reconfiguring duration of the first discard timer and/or duration of the second discard timer.

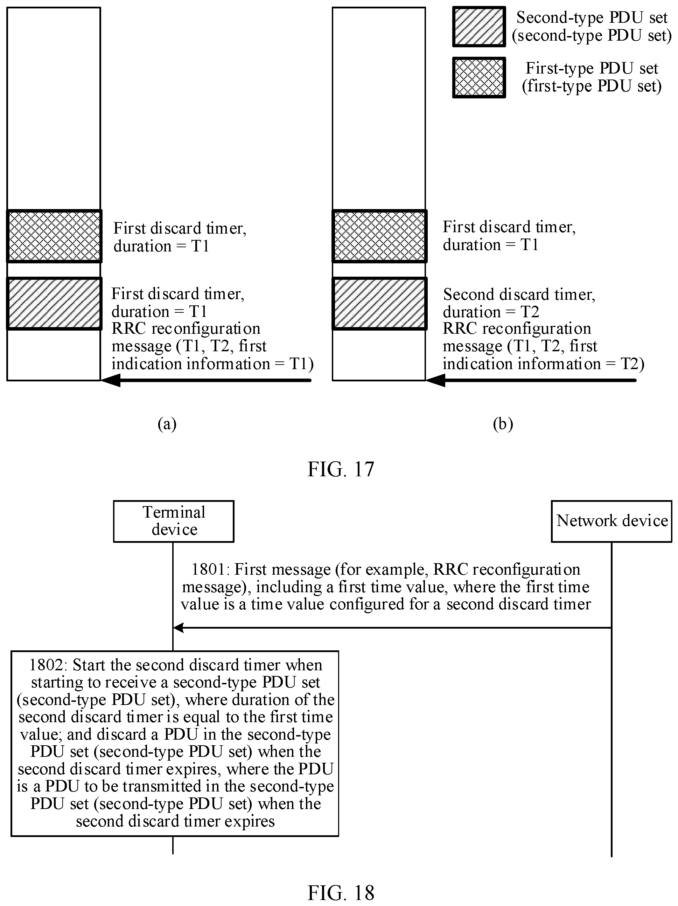

In a possible implementation, a value of the first indication information may be a first value or a second value. If the value of the first indication information is the first value, for example, 0, the first indication information indicates to activate the second discard timer. If the value of the first indication information is the second value, for example, 1, the first indication information indicates to deactivate the second discard timer. In another possible implementation, a value of the first indication information may be equal to a second time value configured for the second discard timer, indicating that the second discard timer is activated; or the value of the first indication information may be equal to a first time value configured for the first discard timer, indicating that the second discard timer is deactivated. For example, as shown in (a) in FIG. 17, the RRC reconfiguration message includes a first time value T1, a second time value T2, and the first indication information. A value of the first indication information is equal to T1, indicating that the first indication information indicates to deactivate the second discard timer, that is, both a first-type PDU set and the second-type PDU set use the first discard timer whose duration is equal to T1. As shown in (b) in FIG. 17, the RRC reconfiguration message includes a first time value T1, a second time value T2, and the first indication information. A value of the first indication information is equal to T2, indicating that the first indication information indicates to activate the second discard timer, that is, the second-type PDU set uses the second discard timer whose duration is equal to T2 and the first-type PDU set uses the first discard timer whose duration is equal to T1.

It may be understood that the value of the first indication information is not limited in this embodiment of this application.

Step 1602: If the first indication information indicates to activate the second discard timer, the terminal device performs step 1603.

Optionally, if the first indication information indicates to deactivate the second discard timer, the terminal device performs step 1604.

Step 1603: The terminal device starts the second discard timer when starting to receive a second-type PDU set, and discards a PDU in the second-type PDU set when the second discard timer expires, where the discarded PDU is a PDU to be transmitted in the second-type PDU set when the second discard timer expires. In other words, the second-type PDU set uses the second discard timer.

Optionally, the duration of the second discard timer may be preconfigured. In other words, the duration of the second discard timer may be preconfigured on the terminal device, and the terminal device may set the duration of the second discard timer based on the preconfigured time value. Alternatively, a default time value of the second discard timer is configured on the terminal device. For example, the time value is previously sent by the network device to the terminal device by using the RRC reconfiguration message, and the terminal device may set the duration of the second discard timer based on the stored time value. In this way, the time value configured for the second discard timer may not be included in the first message, thereby reducing signaling overheads.

Step 1604: The terminal device starts a first discard timer when starting to receive a PDU set, and discards a PDU in the PDU set when the first discard timer expires, where the discarded PDU is a PDU to be transmitted in the PDU set when the first discard timer expires, and the PDU set is the first-type PDU set or the second-type PDU set. In other words, both the first-type PDU set and the second-type PDU set use the first discard timer.

For a specific implementation in which the first-type PDU set and the second-type PDU set use the first discard timer, refer to the foregoing related descriptions.

In the foregoing procedure, for a specific implementation in which the second-type PDU set uses the second discard timer, refer to the foregoing related descriptions. Herein, only two possible implementations are provided as examples. Implementation 1: The terminal device may perform transmission control based on a discard timer per PDU set. For example, the second-type PDU set whose PSI is 5 shown in Table 1 is used as an example. For a PDU set whose PSI is 5, if a data packet belonging to the PDU set is delivered from an upper layer to a PDCP entity, and the PDCP entity determines that the data packet is a 1^{st} data packet in the PDU set, a discard timer corresponding to the PDU set is started. Duration of the discard timer is equal to the duration of the second discard timer configured or preconfigured by the network device, and the discard timer starts counting down after being started. During running of the discard timer, a PDU in the PDU set is sent, and a plurality of data packets belonging to the PDU set are transferred from the upper layer to the PDCP entity. When the discard timer expires, if there are still PDUs that belong to the PDU set and that have not been sent in a buffer of the PDCP entity, the PDCP entity deletes these PDUs from the buffer. Implementation 2: The terminal device may perform transmission control based on a discard timer per PDU. For example, the second-type PDU set whose PSI is 5 shown in Table 1 is still used as an example. For a PDU set whose PSI is 5, if a data packet belonging to the PDU set is delivered from an upper layer to a PDCP entity, and the PDCP entity determines that the data packet is a 1^{st} data packet in the PDU set, a discard timer corresponding to the PDU is started. Duration of the discard timer is equal to the duration of the second discard timer configured or preconfigured by the network device, and the discard timer starts counting down after being started. During running of the discard timer, the PDU is sent, and a plurality of PDUs belonging to the PDU set are transferred from the upper layer to the PDCP entity. When the discard timer expires, the PDU in the buffer of the PDCP entity is deleted from the buffer. Similarly, for a specific implementation in which the first-type PDU set uses the first discard timer and a specific implementation in which the second-type PDU set uses the first discard timer, refer to the foregoing implementations. In the foregoing procedure, because the first message (for example, the RRC reconfiguration message) includes the first indication information, the terminal device may activate or deactivate the second discard timer based on the indication information, and after sending the RRC reconfiguration message, the network device does not need to further send a MAC CE to activate or deactivate the second discard timer, so that impact on service transmission caused by a loss of the MAC CE can be reduced. Further, reliability can be further improved.

In a possible implementation, the first message may further include a first time value, and the first time value is a time value configured for the first discard timer. The terminal device may set, based on the first time value, the duration of the first discard timer to be equal to the first time value.

In a possible implementation, the first message may further include a second time value, and the second time value is a time value configured for the second discard timer. The terminal device may set, based on the second time value, the duration of the second discard timer to be equal to the second time value.

In a possible implementation, the network device may send a second message to the terminal device. Correspondingly, the terminal device receives the second message. The second message includes a third time value, and the third time value is a time value configured for the second discard timer. The terminal device starts the second discard timer when starting to receive a second-type PDU set, where the duration of the second discard timer is equal to the third time value, and discards, when the second discard timer expires, a PDU that is in the second-type PDU set and that is to be transmitted when the second discard timer expires. Optionally, the second message is an RRC reconfiguration message. In other words, the network device may reconfigure the duration of the second discard timer by using the RRC reconfiguration message. After receiving the RRC message, the terminal device may activate the second discard timer, and after sending the RRC reconfiguration message, the network device does not need to further send a MAC CE to activate the second discard timer, so that impact on service transmission caused by a loss of the MAC CE can be reduced. Further, because the MAC CE may not be sent, a latency may be reduced, so that the terminal device can activate the second discard timer as soon as possible to perform transmission control, to adapt to a current network status.

To better perform transmission scheduling, in some embodiments of this application, after the network device sends the message for reconfiguring the duration of the discard timer, the terminal device may activate the second discard timer after receiving the message, and configure the second discard timer based on the time value, so that the second discard timer can be used to perform transmission scheduling on the second-type PDU set. With reference to FIG. 18, the following describes a transmission configuration method provided in an embodiment of this application.

Based on the architecture of the network system shown in FIG. 1 and the content described in the foregoing related technologies, FIG. 18 is an example of a schematic flowchart of a transmission method according to an embodiment of this application. The solution in FIG. 18 is described by using an example in which a network apparatus and a terminal apparatus interact with each other. Specifically, the procedure is described by using an example in which the network apparatus is a network device and the terminal apparatus is a terminal device. For related descriptions of the network apparatus and the terminal apparatus, refer to the foregoing content. Details are not described again.

FIG. 18 is a schematic flowchart of a communication method according to an embodiment of this application.

As shown in FIG. 18, the procedure may include the following steps.

Step 1801: A network device sends a first message, and correspondingly, a terminal device receives the first message. The first message includes a first time value, and the first time value is a time value configured for a second discard timer.

Optionally, the first message is an RRC reconfiguration message.

Optionally, the RRC reconfiguration message is for reconfiguring duration of a discard timer. It may be understood that, before sending the RRC reconfiguration message, the network device may initially configure duration of a first discard timer and/or duration of the second discard timer by using the RRC reconfiguration message or another message. A specific implementation of the initial configuration may be any initial configuration manner provided in embodiments of this application, or may be an initial configuration manner provided in a related technology.

Step 1802: The terminal device starts the second discard timer when starting to receive a second-type PDU set, where the duration of the second discard timer is equal to the first time value; and discards a PDU in the second-type PDU set when the second discard timer expires, where the discarded PDU is a PDU to be transmitted in the second-type PDU set when the second discard timer expires.

In other words, after receiving the first message, the terminal device may activate the second discard timer, and set the second discard timer by using the first time value, so that the second-type PDU set uses the second discard timer, that is, transmission scheduling is performed on the second-type PDU set based on the second discard timer.

In a possible implementation, the first message further includes a second time value, and the second time value is a time value reconfigured for the first discard timer. Correspondingly, the terminal device starts the first discard timer when starting to receive a first-type PDU set, where the duration of the first discard timer is equal to the second time value; and discards a PDU in the first-type PDU set when the first discard timer expires, where the PDU is a PDU to be transmitted in the first-type PDU set when the first discard timer expires.

In other words, after receiving the first message, the terminal device may set the first discard timer by using the second time value, so that the first-type PDU set uses the second discard timer whose time value is the second time value.

In the foregoing procedure, for a specific implementation in which the first-type PDU set or the second-type PDU set uses the first discard timer, and a specific implementation in which the second-type PDU set uses the second discard timer, refer to the foregoing related content.

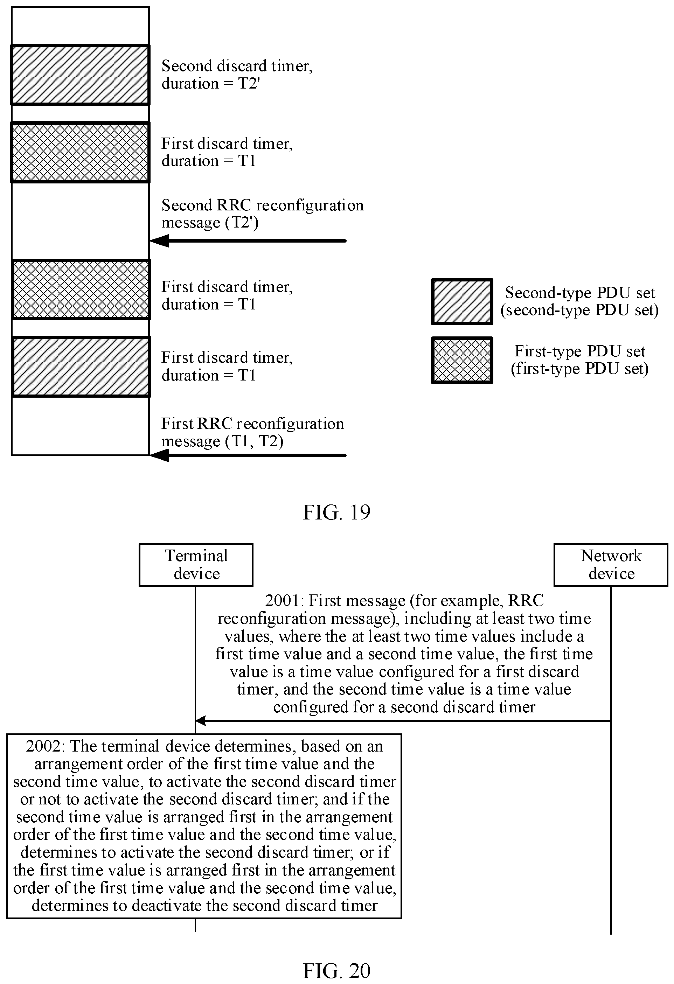

FIG. 19 shows an example of reconfiguring a discard timer by using an RRC reconfiguration message and activating a second discard timer. As shown in FIG. 19, the network device sends a first RRC reconfiguration message, where the first RRC reconfiguration message carries a time value T1 and a time value T2. The terminal device configures duration of a first discard timer based on the time value T1 according to a method provided in a related technology, so that both a first-type PDU set and a second-type PDU set use the first discard timer. The network device sends a second RRC reconfiguration message, where the second RRC reconfiguration message carries a time value T2', and the time value T2' is a time value reconfigured for a second discard timer. The terminal device activates duration of the second discard timer, that is, sets the duration of the second discard timer based on the time value T2', so that second-type PDU set uses the second discard timer.

In the procedure shown in FIG. 18, after receiving the first message, the terminal device may activate the second discard timer, and set the second discard timer by using the first time value, so that the second-type PDU set uses the second discard timer, that is, transmission scheduling is performed on the second-type PDU set based on the second discard timer, and after sending the RRC reconfiguration message, the network device does not need to further send a MAC CE to activate the second discard timer, so that impact on service transmission caused by a loss of the MAC CE can be reduced. Further, because the MAC CE may not be sent, a latency may be reduced, so that the terminal device can activate the second discard timer as soon as possible to perform transmission control, to adapt to a current network status.

To better perform transmission scheduling, in some embodiments of this application, the terminal device may determine, based on an arrangement order of the first time value and the second time value in a message sent by the network device for configuring duration of a discard timer, whether to activate the second discard timer. With reference to FIG. 20, the following describes a transmission configuration method provided in an embodiment of this application. Based on the architecture of the network system shown in FIG. 1 and the content described in the foregoing related technologies, FIG. 20 is an example of a schematic flowchart of a transmission method according to an embodiment of this application. The solution in FIG. 20 is described by using an example in which a network apparatus and a terminal apparatus interact with each other. Specifically, the procedure is described by using an example in which the network apparatus is a network device and the terminal apparatus is a terminal device. For related descriptions of the network apparatus and the terminal apparatus, refer to the foregoing content. Details are not described again.

FIG. 20 is a schematic flowchart of a communication method according to an embodiment of this application.

As shown in FIG. 20, the procedure may include the following steps.

Step 2001: A network device sends a first message, and correspondingly, a terminal device receives the first message. The first message includes at least two time values, the at least two time values include a first time value and a second time value, the first time value is a time value configured for a first discard timer, and the second time value is a time value configured for a second discard timer.

Optionally, the first message is an RRC reconfiguration message.

Optionally, when configuring duration of the first discard timer and duration of the second discard timer, the network device may determine an arrangement order of the first time value and the second time value based on a current network status, or determine a time list corresponding to a discard timer. For example, if the current network status is good, the first time value may be arranged in the front, or the first time value may be arranged first in the list; if a network is blocked currently, the second time value may be arranged in the front, and the first time value may be arranged in the back.

Step 2002: The terminal device determines, based on the arrangement order of the first time value and the second time value, to activate the second discard timer or not to activate the second discard timer.

This step may be alternatively described as follows: The terminal device determines, based on the time value list, to activate the second discard timer or not to activate the second discard timer.

If the second time value is arranged first in the arrangement order of the first time value and the second time value, it is determined to activate the second discard timer. Specifically, the terminal device performs the following steps: starting the first discard timer when starting to receive a first-type PDU set, where the duration of the first discard timer is equal to the first time value; discarding a PDU in the first-type PDU set when the first discard timer expires, where the discarded PDU is a PDU to be transmitted in the first-type PDU set when the first discard timer expires; starting the second discard timer when starting to receive a second-type PDU set, where duration of the second discard timer is equal to the second time value; and discarding a PDU in the second-type PDU set when the second discard timer expires, where the discarded PDU is a PDU to be transmitted in the second-type PDU set when the second discard timer expires. It should be noted that the arrangement order of the second time value and the first time value in this application may be described as an arrangement order of discard timers corresponding to the time values.

If the first time value is arranged first in the arrangement order of the first time value and the second time value, it is determined to deactivate the second discard timer. Specifically, the terminal device performs the following steps: starting the first discard timer when starting to receive a PDU set, where the duration of the first discard timer is equal to the first time value; and discarding a PDU in the PDU set when the first discard timer expires, where the discarded PDU is a PDU to be transmitted in the PDU set when the first discard timer expires, and the PDU set is a first-type PDU set or a second-type PDU set. In other words, both the first-type PDU set and the second-type PDU set use the first discard timer.

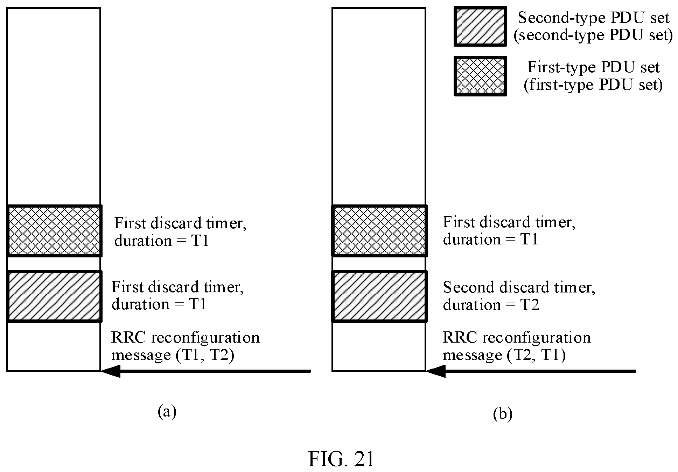

For example, FIG. 21 shows an example of implicitly indicating, by using the arrangement order of the first time value and the second time value, whether to activate the second discard timer. As shown in (a) in FIG. 21, the RRC reconfiguration message sent by the network device includes a time value T1 configured for the first discard timer and a time value T2 configured for the second discard timer, and the time value T1 is arranged in the front. In this case, the terminal device determines that both the first-type PDU set and the second-type PDU set use the first discard timer whose duration is T1. As shown in (b) in FIG. 21, the RRC reconfiguration message sent by the network device includes a time value T1 configured for the first discard timer and a time value T2 configured for the second discard timer, and the time value T2 is arranged in the front. In this case, the terminal device determines that the first-type PDU set uses the first discard timer whose duration is T1 and the second-type PDU set uses the second discard timer whose duration is T2.

The foregoing manner may also be understood as follows: The first message includes a time value list. The time value list includes a first time value corresponding to a first discard timer and one or more second time values corresponding to a second discard timer. For a first-type PDU set, the terminal device may always use a 1^{st} time value in the time value list as duration of the first discard timer. When the 1^{st} time value in the time value list is the first time value, or the 1^{st} time value in the list is not the one or more second time values corresponding to the second discard timer, the terminal device deactivates the second discard timer.

In the foregoing procedure, the terminal device may determine, based on the arrangement order of the first time value and the second time value in the first message, whether to activate the second discard timer. When a network side expects the terminal device to activate the second discard timer, the network device does not need to send a MAC CE to indicate to activate the second discard timer, so that impact on service transmission caused by a loss of the MAC CE can be reduced. Further, reliability can be further improved.

In a possible implementation, the network device may further send a second message, where the second message includes a third time value, and the third time value is a time value configured for the second discard timer. After receiving the second message, the terminal device starts the second discard timer when starting to receive a second-type PDU set, where the duration of the second discard timer is equal to the third time value; and discards a PDU in the second-type PDU set when the second discard timer expires, where the PDU is a PDU to be transmitted in the second-type PDU set when the second discard timer expires. Optionally, the second message is an RRC reconfiguration message.

In other words, the network device may reconfigure the duration of the second discard timer by using the RRC reconfiguration message. After receiving the RRC message, the terminal device may activate the second discard timer, and after sending the RRC reconfiguration message, the network device does not need to further send a MAC CE to activate the second discard timer, so that impact on service transmission caused by a loss of the MAC CE can be reduced. Further, because the MAC CE may not be sent, a latency may be reduced, so that the terminal device can activate the second discard timer as soon as possible to perform transmission control, to adapt to a current network status.

In the procedure shown in FIG. 20, for a specific implementation in which the first-type PDU set or the second-type PDU set uses the first discard timer, and a specific implementation in which the second-type PDU set uses the second discard timer, refer to the foregoing related content.

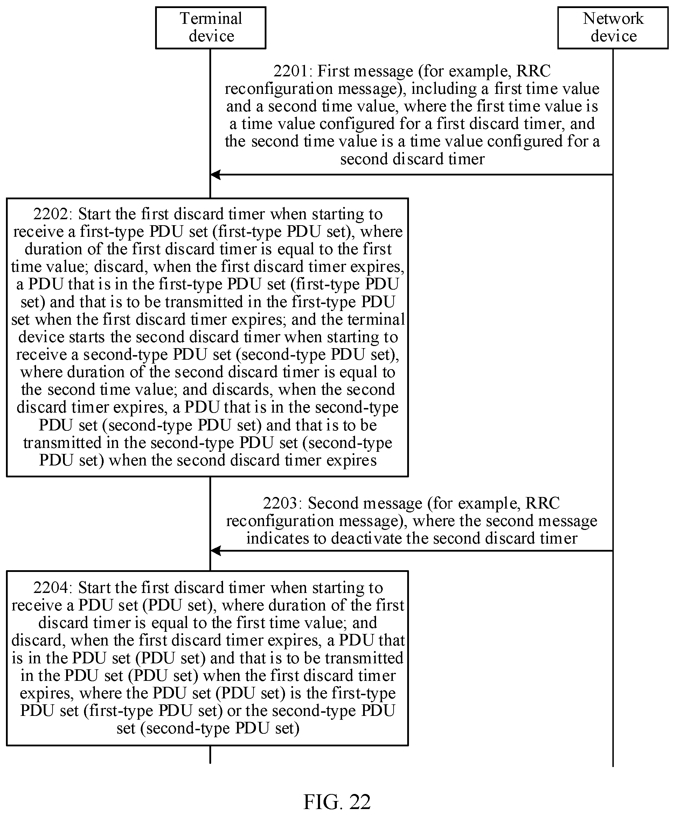

To better perform transmission scheduling, in some embodiments of this application, the network device sends a message for configuring the duration of the first discard timer and the duration of the second discard timer. After receiving the message, the terminal device determines to activate the second discard timer. Subsequently, the network device may send a message to indicate the terminal device to deactivate the second discard timer. With reference to FIG. 22, the following describes a transmission configuration method provided in an embodiment of this application. Based on the architecture of the network system shown in FIG. 1 and the content described in the foregoing related technologies, FIG. 22 is an example of a schematic flowchart of a transmission method according to an embodiment of this application. The solution in FIG. 22 is described by using an example in which a network apparatus and a terminal apparatus interact with each other. Specifically, the procedure is described by using an example in which the network apparatus is a network device and the terminal apparatus is a terminal device. For related descriptions of the network apparatus and the terminal apparatus, refer to the foregoing content. Details are not described again.

FIG. 22 is a schematic flowchart of a communication method according to an embodiment of this application.

As shown in FIG. 22, the procedure may include the following steps.

Step 2201: A network device sends a first message, and correspondingly, a terminal device receives the first message. The first message includes a first time value and a second time value, the first time value is a time value configured for a first discard timer, and the second time value is a time value configured for a second discard timer.

Optionally, the first message is an RRC reconfiguration message.

Step 2202: The terminal device starts the first discard timer when starting to receive a first-type PDU set, where duration of the first discard timer is equal to the first time value; and discards a PDU in the first-type PDU set when the first discard timer expires, where the discarded PDU is a PDU to be transmitted in the first-type PDU set when the first discard timer expires; and the terminal device starts the second discard timer when starting to receive a second-type PDU set, where duration of the second discard timer is equal to the second time value; and discards a PDU in the second-type PDU set when the second discard timer expires, where the discarded PDU is a PDU to be transmitted in the second-type PDU set when the second discard timer expires.

In other words, after receiving the first message, the terminal device determines to activate the second discard timer. In a possible implementation, the foregoing procedure may further include the following steps:
Step 2203: The network device sends a second message to the terminal device, and correspondingly, the terminal device receives the second message. The second message indicates to deactivate the second discard timer.

Step 2204: After receiving the second message, the terminal starts the first discard timer when starting to receive a PDU set, where the duration of the first discard timer is equal to the first time value; and discards a PDU in the PDU set when the first discard timer expires, where the discarded PDU is a PDU to be transmitted in the PDU set when the first discard timer expires, and the PDU set is the first-type PDU set or the second-type PDU set. In other words, both the first-type PDU set and the second-type PDU set use the first discard timer.

In a possible implementation, the network device may further send a third message, where the third message includes a third time value, and the third time value is a time value reconfigured for the second discard timer. After receiving the third message, the terminal device activates the second discard timer. Specifically, the second discard timer is started when starting to receive the second-type PDU set, where the duration of the second discard timer is equal to the third time value; and a PDU in the second-type PDU set is discarded when the second discard timer expires, where the discarded PDU is a PDU to be transmitted in the second-type PDU set when the second discard timer expires.

In the procedure shown in FIG. 22, for a specific implementation in which the first-type PDU set or the second-type PDU set uses the first discard timer, and a specific implementation in which the second-type PDU set uses the second discard timer, refer to the foregoing related content.

In some other embodiments of this application, the network device configures a discard timer for each PDCP entity of the terminal device. The network device may configure at least two time values (which may also be referred to as candidate time values) for the discard timer. For example, two time values are configured. The two time values are respectively a first time value and a second time value. The network device may indicate, by using indication information, the terminal device to set duration of the discard timer either by using the first time value or by using the second time value. The terminal device may determine, based on the indication information, to start a discard timer of a specific time value for the first-type PDU set and a discard timer of a specific time value for the second-type PDU set.

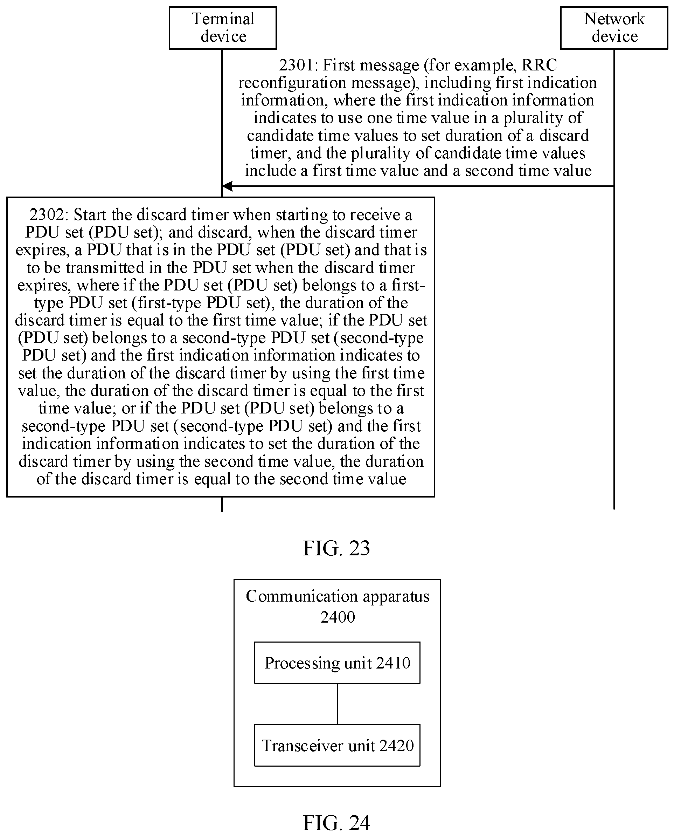

Based on the architecture of the network system shown in FIG. 1 and the content described in the foregoing related technologies, FIG. 23 is an example of a schematic flowchart of a transmission method according to an embodiment of this application. The solution in FIG. 23 is described by using an example in which a network apparatus and a terminal apparatus interact with each other. Specifically, the procedure is described by using an example in which the network apparatus is a network device and the terminal apparatus is a terminal device. For related descriptions of the network apparatus and the terminal apparatus, refer to the foregoing content. Details are not described again.

FIG. 23 is a schematic flowchart of a communication method according to an embodiment of this application.

Step 2301: A network device sends a first message, and correspondingly, a terminal device receives the first message. The first message includes first indication information, the first indication information indicates to use one time value in a plurality of candidate time values to set duration of a discard timer, and the plurality of candidate time values include a first time value and a second time value.

Optionally, the first message is an RRC reconfiguration message.

In a possible implementation, a value of the first indication information may be a first value or a second value. If the value of the first indication information is the first value, for example, 0, it indicates to use the first time value to set the discard timer. If the value of the first indication information is the second value, for example, 1, it indicates to use the second time value to set the duration of the discard timer. It may be understood that the value of the first indication information is not limited in this embodiment of this application.

Step 2302: After receiving the first message, the terminal device starts the discard timer when starting to receive a PDU set, and discards a PDU in the PDU set when the discard timer expires, where the discarded PDU is a PDU to be transmitted in the PDU set when the discard timer expires.

If the PDU set belongs to a first-type PDU set, the duration of the discard timer is equal to the first time value; if the PDU set belongs to a second-type PDU set and the first indication information indicates to set the duration of the discard timer by using the first time value, the duration of the discard timer is equal to the first time value; or if the PDU set belongs to a second-type PDU set and the first indication information indicates to set the duration of the discard timer by using the second time value, the duration of the discard timer is equal to the second time value.

In the foregoing procedure, because the first message (for example, the RRC reconfiguration message) includes the first indication information, the terminal device may determine, based on the indication information, whether to use the first time value to set the duration of the discard timer or use the second time value to set the duration of the discard timer, and the network device does not need to further send a MAC CE after sending the RRC reconfiguration message, so that impact on service transmission caused by a loss of the MAC CE can be reduced. Further, reliability can be further improved.

In a possible implementation, the first message further includes the first time value and/or the second time value.

In a possible implementation, the second time value is preconfigured, or is stored by a terminal.

In a possible implementation, the network device further sends a second message to the terminal device, where the second message includes a third time value, the third time value, and the third time value is a time value configured for the discard timer. After receiving the second message, the terminal device starts the discard timer when starting to receive a PDU set, and discards a PDU in the first-type PDU set when the discard timer expires, where the PDU is a PDU to be transmitted in the PDU set when the discard timer expires. If the PDU set is the second-type PDU set, the duration of the discard timer is equal to the third time value.

Optionally, the second message is an RRC reconfiguration message. In other words, the network device may reconfigure the duration of the second discard timer by using the RRC reconfiguration message. After receiving the RRC message, the terminal device may activate the second discard timer, and after sending the RRC reconfiguration message, the network device does not need to further send a MAC CE to activate the second discard timer, so that impact on service transmission caused by a loss of the MAC CE can be reduced. Further, because the MAC CE may not be sent, a latency may be reduced, so that the terminal device can activate the second discard timer as soon as possible to perform transmission control, to adapt to a current network status.

In the procedure shown in FIG. 23, for a specific implementation of scheduling a PDU in a PDU set by using a discard timer, refer to the foregoing related content.

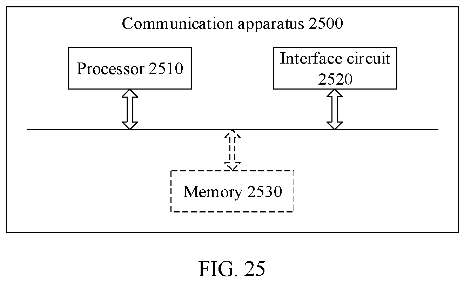

It should be noted that the foregoing describes in detail the discard timers for the first-type PDU set and the second-type PDU set. There may be one or more second time values. To be specific, for the second-type PDU set, the duration of the discard timer corresponding to the second-type PDU set may have a plurality of candidate values. For ease of description, the foregoing uses an example in which the second time value is one time value for detailed description. It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions. FIG. 24 and FIG. 25 are diagrams of possible structures of communication apparatuses according to embodiments of this application. The communication apparatuses may be configured to implement functions of the terminal device or the network device in the foregoing method embodiments, and therefore can also implement the beneficial effects in the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 24, a communication apparatus 2400 includes a processing unit 2410 and a transceiver unit 2420. The communication apparatus 2400 may be configured to implement a function of the terminal device or the network device in the method embodiment shown in any one of FIG. 5 to FIG. 23.

When the communication apparatus 2400 is configured to implement the function of the terminal device in the method embodiment shown in FIG. 5, FIG. 6, or FIG. 7, the transceiver unit 2420 is configured to receive N time value lists, where the N time value lists include a first time value list, the first time value list includes M1 time values, the M1 time values are candidate values of a first discard timer corresponding to a first-type PDU set, and both N and M1 are integers greater than or equal to 1. The processing unit 2410 is configured to: determine an initial time value of the first discard timer, and configure the first discard timer based on the initial time value; and start the first discard timer when starting to receive the first-type PDU set, and discard a remaining PDU in the first-type PDU set when the first discard timer expires, where the remaining PDU is a PDU to be transmitted in the first-type PDU set after the first discard timer expires.

When the communication apparatus 2400 is configured to implement the function of the network device in the method embodiment shown in FIG. 5, FIG. 6, or FIG. 7, the processing unit 2410 is configured to send N time value lists via the transceiver unit 2420, where the N time value lists include a first time value list, the first time value list includes M1 time values, the M1 time values are candidate values of a first discard timer corresponding to a first-type PDU set, and both N and M1 are integers greater than or equal to 1.

When the communication apparatus 2400 is configured to implement a function of the RAN device in the method embodiment shown in any one of FIG. 8 to FIG. 12, the processing unit 2410 is configured to: determine a relationship between a PDU set type and PSI, and schedule a first-type PDU set based on the relationship between the PDU set type and the PSI, where the first-type PDU set is one of the PDU set types.

When the communication apparatus 2400 is configured to implement a function of the core network device in the method embodiment shown in FIG. 9, FIG. 10, or FIG. 12, the processing unit 2410 is configured to send information about a relationship between a PDU set type and PSI to a radio access network RAN device via the transceiver unit 2420.

When the communication apparatus 2400 is configured to implement a function of the application server in the method embodiment shown in FIG. 9 or FIG. 10, the processing unit 2410 is configured to send information about a relationship between a PDU set type and PSI to a core network device via the transceiver unit 2420.

When the communication apparatus 2400 is configured to implement the function of the terminal device in the method embodiment shown in FIG. 11, the processing unit 2410 is configured to send information about a relationship between a PDU set type and PSI to a radio access network RAN device via the transceiver unit 2420.

When the communication apparatus 2400 is configured to implement the function of the terminal device in the method embodiment shown in FIG. 13, the processing unit 2410 is configured to: determine first latency jitter information of a PDU set, and send the first latency jitter information via the transceiver unit 2420.

When the communication apparatus 2400 is configured to implement a function of the PDU receiver in the method embodiment shown in FIG. 14, the transceiver unit 2420 is configured to receive M protocol data units PDUs, where M is an integer greater than or equal to 1. The processing unit 2410 sends first information via the transceiver unit 2420, where the first information includes a receiving status of each of the M PDUs, A PDUs are successfully received and B PDUs fail to be received in the M PDUs, the first information indicates a processing operation on the B PDUs, and both A and B are integers greater than or equal to 0.

When the communication apparatus 2400 is configured to implement a function of the PDU transmitter in the method embodiment shown in FIG. 14, the processing unit 2410 is configured to send M PDUs via the transceiver unit 2420, where M is an integer greater than or equal to 1. The processing unit 2410 further receives first information via the transceiver unit 2420, where the first information includes a receiving status of each of the M PDUs, A PDUs are successfully received and B PDUs fail to be received in the M PDUs, or the first information indicates that the B PDUs fail to be received. The processing unit 2410 determines whether to retransmit or discard the B PDUs.

For more detailed descriptions of the processing unit 2410 and the transceiver unit 2420, directly refer to related descriptions in the method embodiments shown in FIG. 5 to FIG. 23. Details are not described herein again.

As shown in FIG. 25, a communication apparatus 2500 includes a processor 2510 and an interface circuit 2520. The processor 2510 and the interface circuit 2520 are coupled to each other. It may be understood that the interface circuit 2520 may be a transceiver or an input/output interface. Optionally, the communication apparatus 2400 may further include a memory 2530, configured to store instructions executed by the processor 2510, store input data required by the processor 2510 to run instructions, or store data generated after the processor 2510 runs instructions.

When the communication apparatus 2500 is configured to implement the methods shown in FIG. 5 to FIG. 23, the processor 2510 is configured to implement functions of the processing unit 2410, and the interface circuit 2520 is configured to implement functions of the transceiver unit 2420.

When the communication apparatus is a chip used in a terminal device, the terminal chip implements a function of the terminal device in the foregoing method embodiments. The terminal chip receives information from another module (for example, a radio frequency module or an antenna) in the terminal device, where the information is sent by a network device to the terminal; or the terminal chip sends information to another module (for example, a radio frequency module or an antenna) in the terminal device, where the information is sent by the terminal device to a network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal to the network device; or the module in the network device sends information to another module (for example, a radio frequency module or an antenna) in the network device, where the information is sent by the network device to a terminal. The network device module herein may be a baseband chip of the network device, or may be a DU or another module. The DU herein may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the methods in the foregoing embodiments. For example, the communication apparatus includes one processor and one memory. As shown in FIG. 25, the communication apparatus 2500 includes a processor 2510 and a memory 2530. The processor 2510 is coupled to the memory 2530. The memory 2530 stores instructions. When the instructions stored in the memory 2530 are executed by the processor 2510, the communication apparatus 2500 performs the method performed by the terminal device or the network device in the foregoing embodiments.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined into a new embodiment based on an internal logical relationship thereof. In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving N time value lists, wherein the N time value lists comprise a first time value list, the first time value list comprises M1 time values, the M1 time values are candidate values of a first discard timer corresponding to a first-type protocol data unit set PDU set, and both N and M1 are positive integers;
determining an initial time value of the first discard timer;
configuring the first discard timer based on the initial time value; and
starting the first discard timer when starting to receive the first-type PDU set, and discarding a remaining PDU in the first-type PDU set when the first discard timer expires, wherein the remaining PDU is a PDU to be transmitted in the first-type PDU set when the first discard timer expires.

2. The method according to claim 1, wherein the method further comprises:
receiving first information, wherein the first information indicates the initial time value of the first discard timer, and the initial time value is one of the M1 time values; and
determining the initial time value of the first discard timer comprises:
determining the initial time value of the first discard timer based on the first information.

3. The method according to claim 2, wherein the initial time value is a largest time value in the M1 time values or a 1^{st} time value in the M1 time values.

4. The method according to either of claims 2 and 3, wherein receiving the N time value lists comprises:
receiving first signaling, wherein the first signaling comprises the N time value lists; and
receiving the first information comprises:
receiving second signaling, wherein the second signaling comprises the first information and a data radio bearer DRB identifier, and the DRB identifier is a DRB identifier corresponding to a processing unit configured to process the first-type PDU set.

5. The method according to claim 4, wherein if the second signaling is not received, determining the initial time value of the first discard timer comprises:
determining the largest value or the 1^{st} time value in the M1 time values as the initial time value of the first discard timer; or
determining a preset time value as the initial time value of the first discard timer.

6. The method according to any one of claims 2 to 5, wherein the N time value lists further comprise a second time value list, the second time value list comprises M2 time values, the M2 time values are candidate values of a second discard timer corresponding to a second-type PDU set, and M2 is an integer greater than or equal to 1; and
the first information indicates a first time value, and the first time value is the initial time value of the first discard timer, or the first time value is initial time values of the first discard timer and the second discard timer.

7. The method according to claim 1, wherein determining the initial time value of the first discard timer comprises:
determining that the initial time value of the first discard timer is a largest time value in the M1 time values or a 1^{st} time value in the M1 time values.

8. The method according to any one of claims 1 to 7, wherein the N time value lists further comprise the second time value list, the second time value list comprises the M2 time values, the M2 time values are candidate values of the second discard timer corresponding to the second-type PDU set, and the first-type PDU set and the second-type PDU set belong to different PDU set importance PSI ranges.

9. A communication method, wherein the method comprises:
sending N time value lists, wherein the N time value lists comprise a first time value list, the first time value list comprises M1 time values, the M1 time values are candidate values of a first discard timer corresponding to a first-type protocol data unit set PDU set, and both N and M1 are integers greater than or equal to 1.

10. The method according to claim 9, wherein the method further comprises:
sending first information, wherein the first information indicates an initial time value of the first discard timer, and the initial time value is one of the M1 time values.

11. The method according to claim 10, wherein the initial time value is a largest time value in the M1 time values or a 1^{st} time value in the M1 time values.

12. The method according to either of claims 10 and 11, wherein sending the N time value lists comprises:
sending first signaling, wherein the first signaling comprises the N time value lists; and
sending the first information comprises:
sending second signaling, wherein the second signaling comprises the first information and a data radio bearer DRB identifier, and the DRB identifier is a DRB identifier corresponding to a processing unit configured to process the first-type PDU set.

13. The method according to any one of claims 10 to 12, wherein the N time value lists further comprise a second time value list, the second time value list comprises M2 time values, the M2 time values are candidate values of a second discard timer corresponding to a second-type PDU set, and M2 is an integer greater than or equal to 1; and
the first information indicates a first time value, and the first time value is the initial time value of the first discard timer, or the first time value is initial time values of the first discard timer and the second discard timer.

14. The method according to any one of claims 9 to 13, wherein the N time value lists further comprise the second time value list, the second time value list comprises the M2 time values, the M2 time values are candidate values of the second discard timer corresponding to the second-type PDU set, and the first-type PDU set and the second-type PDU set belong to different PDU set importance PSI ranges.

15. A communication method, wherein the method comprises:
determining first latency jitter information of a protocol data unit set PDU set; and
sending the first latency jitter information.

16. The method according to claim 15, wherein before determining the first latency jitter information of the PDU set, the method further comprises:
receiving indication information of first duration, wherein the first duration is duration for collecting statistics on latency jitter; and
determining the first latency jitter information of the PDU set comprises:
determining first latency jitter information of the PDU set in the first duration.

17. The method according to either of claims 15 and 16, wherein before determining the first latency jitter information of the PDU set, the method further comprises:
receiving a data radio bearer DRB identifier and a quality of service flow QoS flow identifier; and
determining the first latency jitter information of the PDU set comprises:
determining first latency jitter information of a PDU set in a QoS flow corresponding to the QoS flow identifier in a DRB corresponding to the DRB identifier.

18. The method according to either of claims 15 and 16, wherein before determining the first latency jitter information of the PDU set, the method further comprises:
receiving a PDU session identifier and a QoS flow identifier; and
determining the first latency jitter information of the PDU set comprises:
determining first latency jitter information of a PDU set in a QoS flow corresponding to the QoS flow identifier in a PDU session corresponding to the PDU session identifier.

19. The method according to any one of claims 15 to 18, wherein the method further comprises:
sending the DRB identifier and the QoS flow identifier that correspond to the first latency jitter information, wherein the first latency jitter information is latency jitter information of the PDU set in the QoS flow corresponding to the QoS flow identifier in the DRB corresponding to the DRB identifier; or
sending the PDU session identifier and the QoS flow identifier that correspond to the first latency jitter information, wherein the first latency jitter information is latency jitter information of the PDU set in the QoS flow corresponding to the QoS flow identifier in the PDU session corresponding to the PDU session identifier.

20. The method according to any one of claims 15 to 19, wherein the method further comprises:
starting a first timer after sending the first latency jitter information, wherein duration of the first timer is equal to second duration; and
determining second latency jitter information of the PDU set, and sending the second latency jitter information when the first timer expires.

21. The method according to claim 20, wherein the second duration is configured by a network side or is predefined.

22. The method according to any one of claims 15 to 21, wherein the first latency jitter information comprises one or more of the following: average latency jitter, maximum latency jitter, a latency jitter range, and minimum latency jitter.

23. The method according to any one of claims 15 to 22, wherein the method further comprises:
sending capability information of a terminal device, wherein the capability information indicates that the terminal device has a capability of determining latency jitter information of a PDU set.

24. A transmission scheduling method, applied to a radio access network RAN device, wherein the method comprises:
determining a relationship between a protocol data unit set PDU set type and PDU set importance PSI; and
scheduling a first-type PDU set based on the relationship between the PDU set type and the PSI, wherein the first-type PDU set is one of the PDU set types.

25. The method according to claim 24, wherein the relationship between the PDU set type and the PDU set importance PSI is from a core network device, a terminal device, or another RAN device.

26. The method according to either of claims 24 and 25, wherein each PDU set corresponds to one level of PSI; and
determining the relationship between the PDU set type and the PSI comprises:
determining the relationship between the PDU set type and the PSI based on at least one PSI threshold; or
determining the relationship between the PDU set type and the PSI based on a mapping table between the PDU set type and a PSI range.

27. The method according to any one of claims 24 to 26, wherein the RAN device is a source RAN device, and the method further comprises:
sending information about the relationship between the PDU set types to a target RAN device, wherein the information about the relationship indicates the relationship between the PDU set types.

28. The method according to claim 27, wherein sending the information about the relationship between the PDU set types to the target RAN device comprises:
sending a handover request message to the target RAN device, wherein the handover request message comprises the information indicating the relationship between the PDU set types.

29. A communication method, applied to a core network device, wherein the method comprises:
sending information about a relationship between a protocol data unit set PDU set type and PDU set importance PSI to a radio access network RAN device.

30. The method according to claim 29, wherein before sending the information about the relationship between the PDU set type and the PSI to the RAN device, the method further comprises:
receiving the information about the relationship between the PDU set type and the PSI from an application server.

31. The method according to claim 30, wherein the information about the relationship between the PDU set type and the PSI from the application server is per service;
after receiving the information about the relationship between the PDU set type and the PSI from the application server, the method further comprises:
converting the information that is about the relationship between the PDU set type and the PSI and that is per service into information that is about the relationship between the PDU set type and the PSI and that is per quality of service flow QoS flow; and
sending the information about the relationship between the PDU set type and the PSI to the RAN device comprises:
sending the information that is about the relationship between the PDU set type and the PSI and that is per QoS flow to the RAN device.

32. The method according to claim 29, wherein sending the information about the relationship between the PDU set type and the PSI to the RAN device comprises:
sending a path switch request acknowledgment message to a target RAN device, wherein the path switch request acknowledgment message comprises the information about the relationship between the PDU set type and the PSI.

33. A communication method, applied to an application server, wherein the method comprises:
sending information about a relationship between a protocol data unit set PDU set type and PDU set importance PSI to a core network device.

34. The method according to claim 33, wherein before sending the information about the relationship between the PDU set type and the PSI to the core network device, the method further comprises:
receiving the information about the relationship between the PDU set type and the PSI from a terminal device.

35. The method according to either of claims 33 and 34, wherein the information about the relationship between the PDU set type and the PSI comprises at least one PSI threshold, the at least one PSI threshold is for obtaining at least two PSI ranges through division, and the at least two PSI ranges separately correspond to one PDU set type; or
the information about the relationship between the PDU set type and the PSI is a mapping table between a PDU set type and a PSI range.

36. The method according to any one of claims 33 to 35, wherein the information about the relationship between the PDU set type and the PSI is per service.

37. A communication method, applied to a terminal device, wherein the method comprises:
sending information about a relationship between a protocol data unit set PDU set type and PDU set importance PSI to a radio access network RAN device.

38. The method according to claim 37, wherein sending the information about the relationship between the PDU set type and the PSI to the RAN device comprises:
sending a radio resource control RRC reconfiguration complete message to a target RAN device, wherein the RRC reconfiguration complete message comprises the information about the relationship between the PDU set type and the PSI.

39. The method according to either of claims 37 and 38, wherein the information about the relationship between the PDU set type and the PSI comprises at least one PSI threshold, the at least one PSI threshold is for obtaining at least two PSI ranges through division, and the at least two PSI ranges separately correspond to one PDU set type; or
the information about the relationship between the PDU set type and the PSI is a mapping table between a PDU set type and a PSI range.

40. The method according to any one of claims 37 to 39, wherein the information about the relationship between the PDU set type and the PSI is per data radio bearer DRB.

41. A communication method, wherein the method comprises:
receiving M protocol data units PDUs, wherein M is an integer greater than or equal to 1, A PDUs are successfully received and B PDUs fail to be received in the M PDUs, and both A and B are positive integers; and
sending first information, wherein the first information comprises a receiving status of each of the M PDUs, and the first information indicates a processing operation on the B PDUs.

42. The method according to claim 41, wherein the first information comprises first indication information, and the first indication information indicates the processing operation on the B PDUs.

43. The method according to claim 41, wherein the first information comprises second indication information, wherein the second indication information indicates to discard the B PDUs.

44. A communication method, wherein the method comprises:
sending M protocol data units PDUs, wherein M is an integer greater than or equal to 1, A PDUs are successfully received and B PDUs fail to be received in the M PDUs, and both A and B are positive integers;
receiving first information, wherein the first information comprises a receiving status of each of the M PDUs, or the first information indicates that the B PDUs fail to be received; and
determining whether to retransmit or discard the B PDUs.

45. The method according to claim 44, wherein determining whether to retransmit or discard the B PDUs comprises:
receiving first indication information, wherein the first indication information indicates a processing operation on the B PDUs; and
determining, based on the first indication information, whether to retransmit or discard the B PDUs.

46. The method according to claim 44, wherein the method further comprises:
receiving second indication information, wherein the second indication information indicates to discard the B PDUs.

47. The method according to any one of claims 44 to 46, wherein if it is determined to discard the B PDUs, the method further comprises:
determining whether a quantity of PDUs that fail to be received in a PDU set to which the B PDUs belong meets a first condition; and
if the first condition is met, discarding the PDU set.

48. A communication method, comprising:
receiving a first message, wherein the first message comprises first indication information, the first indication information indicates to activate a second discard timer or deactivate the second discard timer, and the second discard timer is one of at least two discard timers; and
if the first indication information indicates to activate the second discard timer, performing the following steps:
starting the second discard timer when starting to receive a second-type PDU set, and discarding a PDU in the second-type PDU set when the second discard timer expires, wherein the PDU is a PDU to be transmitted in the second-type PDU set when the second discard timer expires.

49. The method according to claim 48, wherein the method further comprises:
if the first indication information indicates to deactivate the second discard timer, starting a first discard timer when starting to receive a PDU set, and discarding a PDU in the PDU set when the first discard timer expires, wherein the PDU is a PDU to be transmitted in the PDU set when the first discard timer expires, and the PDU set is a first-type PDU set or the second-type PDU set.

50. The method according to claim 49, wherein the first message further comprises a first time value, and the first time value is a time value configured for the first discard timer; and
starting the first discard timer comprises:
setting duration of the first discard timer to be equal to the first time value.

51. The method according to any one of claims 48 to 50, wherein the first message further comprises a second time value, and the second time value is a time value configured for the second discard timer; and
starting the second discard timer comprises:
setting duration of the second discard timer to be equal to the second time value.

52. The method according to any one of claims 48 to 50, wherein duration of the second timer is equal to a second time value, and the second time value is preconfigured, or the second time value is stored by a terminal.

53. The method according to any one of claims 48 to 52, wherein the method further comprises:
receiving a second message, wherein the second message comprises a third time value, and the third time value is a time value configured for the second discard timer; and
starting the second discard timer when starting to receive a second-type PDU set, wherein the duration of the second discard timer is equal to the third time value, and discarding, when the second discard timer expires, a PDU that is in the second-type PDU set and that is to be transmitted when the second discard timer expires.

54. A communication method, comprising:
sending a first message, wherein the first message comprises first indication information, the first indication information indicates to activate a second discard timer or deactivate the second discard timer, and the second discard timer is one of at least one discard timer.

55. The method according to claim 54, wherein the first message further comprises a first time value and/or a second time value, the first time value is a time value configured for a first discard timer, and the second time value is a time value configured for the second discard timer.

56. A communication method, comprising:
receiving a first message, wherein the first message comprises first indication information, the first indication information indicates to use one time value in a plurality of candidate time values to set duration of a discard timer, and the plurality of candidate time values comprise a first time value and a second time value; and
starting the discard timer when starting to receive a PDU set, and discarding a PDU in the PDU set when the discard timer expires, wherein the PDU is a PDU to be transmitted in the PDU set when the discard timer expires, wherein
if the PDU set belongs to a first-type PDU set, the duration of the discard timer is equal to the first time value;
if the PDU set belongs to a second-type PDU set and the first indication information indicates to use the first time value to set the duration of the discard timer, the duration of the discard timer is equal to the first time value; or
if the PDU set belongs to a second-type PDU set and the first indication information indicates to use the second time value to set the duration of the discard timer, the duration of the discard timer is equal to the second time value.

57. The method according to claim 56, wherein the first message further comprises the first time value and/or the second time value.

58. The method according to claim 56, wherein the second time value is preconfigured, or is stored by a terminal.

59. The method according to any one of claims 56 to 58, wherein the method further comprises:
receiving a second message, wherein the second message comprises a third time value; and
starting the discard timer when starting to receive a PDU set, and discarding a PDU in the first-type PDU set when the discard timer expires, wherein the PDU is a PDU to be transmitted in the PDU set when the discard timer expires, wherein
if the PDU set is the second-type PDU set, the duration of the discard timer is equal to the third time value.

60. A communication method, comprising:
sending a first message, wherein the first message comprises first indication information, the first indication information indicates to use one time value in a plurality of candidate time values to set duration of a discard timer, and the plurality of candidate time values comprise a first time value and a second time value.

61. The method according to claim 60, wherein the first message further comprises the first time value and/or the second time value.

62. The method according to either of claims 60 and 61, wherein the method further comprises:
sending a second message, wherein the second message comprises a third time value, and the third time value is a time value reconfigured for the discard timer.

63. A communication method, comprising:
receiving a first message, wherein the first message comprises a first time value, and the first time value is a time value configured for a second discard timer; and
starting the second discard timer when starting to receive a second-type PDU set, wherein duration of the second discard timer is equal to the first time value; and discarding a PDU in the second-type PDU set when the second discard timer expires, wherein the PDU is a PDU to be transmitted in the second-type PDU set when the second discard timer expires.

64. The method according to claim 63, wherein the first message further comprises a second time value, and the second time value is a time value reconfigured for a first discard timer; and
the method further comprises:
starting the first discard timer when starting to receive a first-type PDU set, wherein duration of the first discard timer is equal to the second time value; and discarding a PDU in the first-type PDU set when the first discard timer expires, wherein the PDU is a PDU to be transmitted in the first-type PDU set when the first discard timer expires.

65. A communication method, comprising:
receiving a first message, wherein the first message comprises at least two time values, the at least two time values comprise a first time value and a second time value, the first time value is a time value configured for a first discard timer, and the second time value is a time value configured for a second discard timer; and
if the second discard timer is arranged before the first discard timer, performing the following steps:
starting the first discard timer when starting to receive a first-type PDU set, wherein duration of the first discard timer is equal to the first time value; and discarding a PDU in the first-type PDU set when the first discard timer expires, wherein the PDU is a PDU to be transmitted in the first-type PDU set when the first discard timer expires; and
starting the second discard timer when starting to receive a second-type PDU set, wherein duration of the second discard timer is equal to the second time value; and discarding a PDU in the second-type PDU set when the second discard timer expires, wherein the PDU is a PDU to be transmitted in the second-type PDU set when the second discard timer expires.

66. The method according to claim 65, wherein the method further comprises:
if the first discard timer is arranged before the second discard timer, performing the following steps:
starting the first discard timer when starting to receive a PDU set, wherein the duration of the first discard timer is equal to the first time value; and discarding a PDU in the PDU set when the first discard timer expires, wherein the PDU is a PDU to be transmitted in the PDU set when the first discard timer expires, and the PDU set is the first-type PDU set or the second-type PDU set.

67. The method according to either of claims 65 and 66, wherein the method further comprises:
receiving a second message, wherein the second message comprises a third time value, and the third time value is a time value configured for the second discard timer; and
starting the second discard timer when starting to receive a second-type PDU set, wherein the duration of the second discard timer is equal to the third time value; and discarding a PDU in the second-type PDU set when the second discard timer expires, wherein the PDU is a PDU to be transmitted in the second-type PDU set when the second discard timer expires.

68. A communication method, comprising:
receiving a first message, wherein the first message comprises a first time value and a second time value, the first time value is a time value configured for a first discard timer, and the second time value is a time value configured for a second discard timer;
starting the first discard timer when starting to receive a first-type PDU set, wherein duration of the first discard timer is equal to the first time value; and discarding a PDU in the first-type PDU set when the first discard timer expires, wherein the PDU is a PDU to be transmitted in the first-type PDU set when the first discard timer expires; and
starting the second discard timer when starting to receive a second-type PDU set, wherein duration of the second discard timer is equal to the second time value; and discarding a PDU in the second-type PDU set when the second discard timer expires, wherein the PDU is a PDU to be transmitted in the second-type PDU set when the second discard timer expires.

69. The method according to claim 68, wherein the method further comprises:
receiving a second message, wherein the second message indicates to deactivate the second discard timer; and
starting the first discard timer when starting to receive a PDU set, wherein the duration of the first discard timer is equal to the first time value; and discarding a PDU in the PDU set when the first discard timer expires, wherein the PDU is a PDU to be transmitted in the PDU set when the first discard timer expires, and the PDU set is the first-type PDU set or the second-type PDU set.

70. The method according to claim 68 or 69, wherein the method further comprises:
receiving a third message, wherein the third message comprises a third time value, and the third time value is a time value reconfigured for the second discard timer; and
starting the second discard timer when starting to receive a second-type PDU set, wherein the duration of the second discard timer is equal to the third time value; and discarding a PDU in the second-type PDU set when the second discard timer expires, wherein the PDU is a PDU to be transmitted in the second-type PDU set when the second discard timer expires.

71. A communication system, comprising a RAN device configured to perform the method according to any one of claims 24 to 28 and a core network device configured to perform the method according to any one of claims 29 to 32.

72. A communication apparatus, comprising a module configured to perform the method according to any one of claims 1 to 8, comprising a module configured to perform the method according to any one of claims 9 to 14, comprising a module configured to perform the method according to any one of claims 15 to 23, comprising a module configured to perform the method according to any one of claims 24 to 28, comprising a module configured to perform the method according to any one of claims 29 to 32, comprising a module configured to perform the method according to any one of claims 33 to 36, comprising a module configured to perform the method according to any one of claims 37 to 40, comprising a module configured to perform the method according to any one of claims 41 to 43, comprising a module configured to perform the method according to any one of claims 44 to 47, comprising a module configured to perform the method according to any one of claims 48 to 53, comprising a module configured to perform the method according to either of claims 54 and 55, comprising a module configured to perform the method according to any one of claims 56 to 59, comprising a module configured to perform the method according to any one of claims 60 to 62, comprising a module configured to perform the method according to either of claims 63 and 64, comprising a module configured to perform the method according to any one of claims 65 to 67, or comprising a module configured to perform the method according to any one of claims 68 to 70.

73. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and by using a logic circuit or executing code instructions, the processor is configured to implement the method according to any one of claims 1 to 8, configured to implement the method according to any one of claims 9 to 14, configured to implement the method according to any one of claims 15 to 23, configured to implement the method according to any one of claims 24 to 28, configured to implement the method according to any one of claims 29 to 32, configured to implement the method according to any one of claims 33 to 36, configured to implement the method according to any one of claims 37 to 40, configured to implement the method according to any one of claims 41 to 43, configured to implement the method according to any one of claims 44 to 47, configured to implement the method according to any one of claims 48 to 53, configured to implement the method according to either of claims 54 and 55, configured to implement the method according to any one of claims 56 to 59, configured to implement the method according to any one of claims 60 to 62, configured to implement the method according to either of claims 63 and 64, configured to implement the method according to any one of claims 65 to 67, or configured to implement the method according to any one of claims 68 to 70.

74. A computer-readable storage medium, wherein the storage medium stores a computer program or instructions; and when the computer program or the instructions are executed by a communication apparatus, the method according to any one of claims 1 to 8, the method according to any one of claims 9 to 14, the method according to any one of claims 15 to 23, the method according to any one of claims 24 to 28, the method according to any one of claims 29 to 32, the method according to any one of claims 33 to 36, the method according to any one of claims 37 to 40, the method according to any one of claims 41 to 43, the method according to any one of claims 44 to 47, the method according to any one of claims 48 to 53, the method according to either of claims 54 and 55, the method according to any one of claims 56 to 59, the method according to any one of claims 60 to 62, the method according to either of claims 63 and 64, the method according to any one of claims 65 to 67, or the method according to any one of claims 68 to 70 is implemented.

75. A chip system, comprising: a memory, configured to store a computer program; and a processor, wherein after the processor invokes the computer program from the memory and runs the computer program, a communication apparatus on which the chip system is installed is enabled to perform the method according to any one of claims 1 to 70.

76. A computer program product, wherein when the computer program product runs on a communication apparatus, the communication apparatus is enabled to perform the method according to any one of claims 1 to 70.
